# EUROPEAN PATENT APPLICATION

(11) **EP 4 645 674 A1**
(43) Date of publication of application: **05.11.2025**
(21) Application number: 23911436.6
(22) Date of filing: 16.11.2023
(51) Int. Cl.: H02P 5/46, G05D 3/00, G05D 3/12

(54) **MEASUREMENT SYSTEM, CONTROL DEVICE, MEASUREMENT METHOD, AND PROGRAM**

(30) Priority: 28.12.2022 JP 2022212351; 29.05.2023 JP 2023088233; 31.07.2023 JP 2023125072
(71) Applicant: Panasonic Intellectual Property Management Co., Ltd., Kadoma-shi, Osaka 571-0057 (JP)
(72) Inventor: FUJIMORI, Takehiro, Kadoma-shi, Osaka 571-0057 (JP); ITO, Gimpei, Kadoma-shi, Osaka 571-0057 (JP); MATSUOKA, Hiroto, Kadoma-shi, Osaka 571-0057 (JP); TSUTSUI, Kento, Kadoma-shi, Osaka 571-0057 (JP); SASAKI, Noriaki, Kadoma-shi, Osaka 571-0057 (JP)
(74) Representative: SSM Sandmair
(86) International application number: PCT/JP2023/041325
(87) International publication number: WO 2024/142654

(57) **Abstract**

The present disclosure aims to suppress an influence of interference between two main shafts in a synchronous drive system. Measurement system (1) includes: command part (10); first acquisition part (11); second acquisition part (12); and calculation part (14). Command part (10) is configured to give the same position command to first controller (31) and second controller (32) to cause these parts to control first motor (M1) and second motor (M2) so as to perform a test operation in which first main shaft (Y1) and second main shaft (Y2) move to designated positions in synchronization with each other. First acquisition part (11) is configured to acquire first information on a first force to be applied to first main shaft (Y1) and a second force to be applied to second main shaft (Y2) during the test operation. Second acquisition part (12) is configured to acquire second information on the positions of first motor (M1) and second motor (M2) during the test operation. Calculation part 14 is configured to calculate the amount of position correction of first motor (M1) or second motor (M2) in order to correct a position shift between first main shaft (Y1) and second main shaft (Y2) based on the first information and the second information.

## Description

### TECHNICAL FIELD

The present disclosure generally relates to a measurement system, a control device, a measurement method, and a program. More specifically, the present disclosure relates to a measurement system that measures the amount of position correction to be applied to a synchronous drive system that synchronously drives two parallel main shafts, a control device of the synchronous drive system, a measurement method, and a program.

### BACKGROUND ART

PTL 1 discloses a position control system. The position control system includes a general-purpose personal computer (PC), an X-axis servo amplifier, a Y1-axis servo amplifier, and a Y2-axis servo amplifier. The Y2-axis servo amplifier is configured to control driving of a Y2-axis linear motor based on a Y-axis position command input from the general-purpose PC. The Y2-axis servo amplifier includes a correction value table storage that stores an interaxial correction value corresponding to each predetermined value of the Y-axis position command. The Y2-axis servo amplifier acquires the interaxial correction value corresponding to the input Y-axis position command from the correction value table storage, and controls driving of the Y2-axis linear motor based on a Y2-axis correction position command obtained by adding or subtracting the interaxial correction value to or from the input Y-axis position command.

### Citation List

### Patent Literature

PTL 1: Unexamined Japanese Patent Publication No. 2017-41075

### SUMMARY OF THE INVENTION

In the position control system described in PTL 1, in order to perform position correction between the Y1 axis and the Y2 axis, the correction value is obtained based on the position (shift) between the Y1 axis and the Y2 axis. However, the correction based on the position shift may not be able to suppress an influence (for example, deterioration of device due to torsion or the like of the axis) that can occur due to interference between the Y1 axis (first main shaft) and the Y2 axis (second main shaft).

The present disclosure has been made in view of the above circumstances, and an object thereof is to provide a measurement system, a control device, a measurement method, and a program capable of suppressing an influence that can occur due to interaxial interference.

A measurement system according to one aspect of the present disclosure is configured to measure the amount of position correction to be applied to a synchronous drive system. The synchronous drive system includes: a first main shaft and a second main shaft; and a first controller and a second controller. The first main shaft and the second main shaft are connected in parallel to each other via a sub shaft. The first main shaft and the second main shaft include a first motor and a second motor, respectively. The first controller and the second controller are configured to control the first motor and the second motor so that the first main shaft and the second main shaft move in an axial direction in synchronization with each other. The measurement system includes: a command part; a first acquisition part; a second acquisition part; and a calculation part. The command part is configured to give the same position command to the first controller and the second controller to cause these parts to control the first motor and the second motor so as to perform a test operation in which the first main shaft and the second main shaft move to designated positions in synchronization with each other. The first acquisition part is configured to acquire first information on a first force to be applied to the first main shaft and a second force to be applied to the second main shaft during the test operation. The second acquisition part is configured to acquire second information on the positions of the first motor and the second motor during the test operation. The calculation part is configured to calculate the amount of position correction of at least one of the first motor and the second motor in order to correct a position shift between the first main shaft and the second main shaft based on the first information and the second information.

A control device according to another aspect of the present disclosure includes one of the first controller and the second controller to which the position command is input from the measurement system. The controller controls a corresponding motor out of the first motor and the second motor based on the position command so as to perform the test operation in which a corresponding main shaft out of the first main shaft and the second main shaft moves to the designated position. The control device further includes a first output part and a second output part. The first output part outputs the first information on the force applied to the main shaft during the test operation. The second output part outputs the second information on the position of the motor during the test operation.

A control device according to another aspect of the present disclosure includes one of the first controller and the second controller to which the position command is input from the measurement system. The control device has at least a part of the functions related to the command part, the first acquisition part, the second acquisition part, and the calculation part in the measurement system described above.

A control device according to still another aspect of the present disclosure includes one of the first controller and the second controller to which the position command is input from the measurement system. The control device further includes a storage that stores correction information including the amount of position correction calculated by the calculation part. The controller controls a corresponding motor out of the first motor and the second motor based on the correction information stored in the storage during the test operation or the normal operation.

A measurement method according to still another aspect of the present disclosure measures the amount of position correction to be applied to the synchronous drive system. The synchronous drive system includes: a first main shaft and a second main shaft; and a first controller and a second controller. The first main shaft and the second main shaft are connected in parallel to each other via a sub shaft. The first main shaft and the second main shaft include a first motor and a second motor, respectively. The first controller and the second controller are configured to control the first motor and the second motor so that the first main shaft and the second main shaft move in an axial direction in synchronization with each other. The measurement method includes a command processing step, a first acquisition processing step, a second acquisition processing step, and a calculation processing step. In the command processing step, the same position command is given to the first controller and the second controller to cause these parts to control the first motor and the second motor so as to perform a test operation in which the first main shaft and the second main shaft move to designated positions in synchronization with each other. In the first acquisition processing step, first information on a first force to be applied to the first main shaft and a second force to be applied to the second main shaft during the test operation is acquired. In the second acquisition processing step, second information on the positions of the first motor and the second motor during the test operation is acquired. In the calculation processing step, the amount of position correction of at least one of the first motor and the second motor is calculated in order to correct a position shift between the first main shaft and the second main shaft based on the first information and the second information.

A program according to still another aspect of the present disclosure is a program for causing one or more processors to execute the measurement method described above.

According to the measurement system, the control device, the measurement method, and the program of the present disclosure, there is an advantage that it is possible to suppress an influence that can occur due to interaxial interference.

### BRIEF DESCRIPTION OF THE DRAWINGS

Fig. 1 is a schematic block configuration diagram of a measurement system according to an exemplary embodiment and a synchronous drive system to which the measurement system is applied.
Fig. 2 is a schematic diagram of the synchronous drive system and a peripheral configuration thereof.
Fig. 3 is a flowchart for describing an operation related to correction amount measurement processing in the measurement system.
Fig. 4 is a flowchart for describing an operation related to correction amount optimization processing in the measurement system.
Fig. 5 is a schematic block configuration diagram for describing Modification 1 of the measurement system.
Fig. 6 is a schematic block configuration diagram for describing Modification 2 of the measurement system.
Fig. 7 is a schematic block configuration diagram for describing Modification 3 of the measurement system.
Fig. 8 is a flowchart for describing an operation related to acquisition of a correction coefficient of Modification 4 of the measurement system.
Fig. 9 is a conceptual diagram of a correction value checking screen in Modification 4 described above.
Fig. 10 is a conceptual diagram of an operation screen in Modification 4 described above.
Fig. 11 is a conceptual diagram of a parameter setting screen in Modification 4 described above.
Fig. 12 is a conceptual diagram of the correction value checking screen in Modification 4 described above.
Fig. 13 is a conceptual diagram of a thrust difference checking screen in Modification 4 described above.
Fig. 14 is a conceptual diagram of the thrust difference checking screen in Modification 4 described above.
Fig. 15 is a conceptual diagram of the thrust difference checking screen in Modification 4 described above.
Fig. 16 is a conceptual diagram of the correction value checking screen in Modification 4 described above.
Fig. 17 is a conceptual diagram of a screen for describing a first function (unit conversion function) of Modification 5 of the measurement system.
Fig. 18 is a conceptual diagram of the screen for describing the first function.
Fig. 19A is a conceptual diagram of a screen for describing a second function (conversion function into a figure format) of Modification 5 described above.
Fig. 19B is a conceptual diagram of the screen for describing the second function (conversion function into a figure format) of Modification 5 described above.
Fig. 20 is a conceptual diagram of a screen for describing a third function (function of associating date information) of Modification 5 described above.
Fig. 21A is a conceptual diagram of a screen for describing a fourth function (conversion function into a chart format) of Modification 5 described above.
Fig. 21B is a conceptual diagram of the screen for describing the fourth function (conversion function into a chart format) of Modification 5 described above.
Fig. 22A is a conceptual diagram of a screen for describing a fifth function (conversion function into a histogram format) of Modification 5 described above.
Fig. 22B is a conceptual diagram of the screen for describing the fifth function (conversion function into a histogram format) of Modification 5 described above.
Fig. 23 is a conceptual diagram of a screen for describing a sixth function (past data comparison display function) of Modification 5 described above.
Fig. 24A is a conceptual diagram of a screen for describing a seventh function (past data comparison display function in another display format) of Modification 5 described above.
Fig. 24B is a conceptual diagram of the screen for describing the seventh function (past data comparison display function in another display format) of Modification 5 described above.

### DESCRIPTION OF EMBODIMENT

### (Outline)

Hereinafter, a measurement system, a control device, a measurement method, and a program according to an exemplary embodiment and modifications will be described with reference to the drawings. Note, however, that the exemplary embodiment and the modifications are merely one of various exemplary embodiments of the present disclosure. In addition, the exemplary embodiment and the modifications can be variously changed according to the design and the like as long as an object of the present disclosure can be achieved. Further, the configurations of the modifications can be appropriately combined.

The drawings described in the following exemplary embodiment and modifications are merely schematic diagrams, and ratios in size and thickness of components do not always reflect actual dimensional ratios.

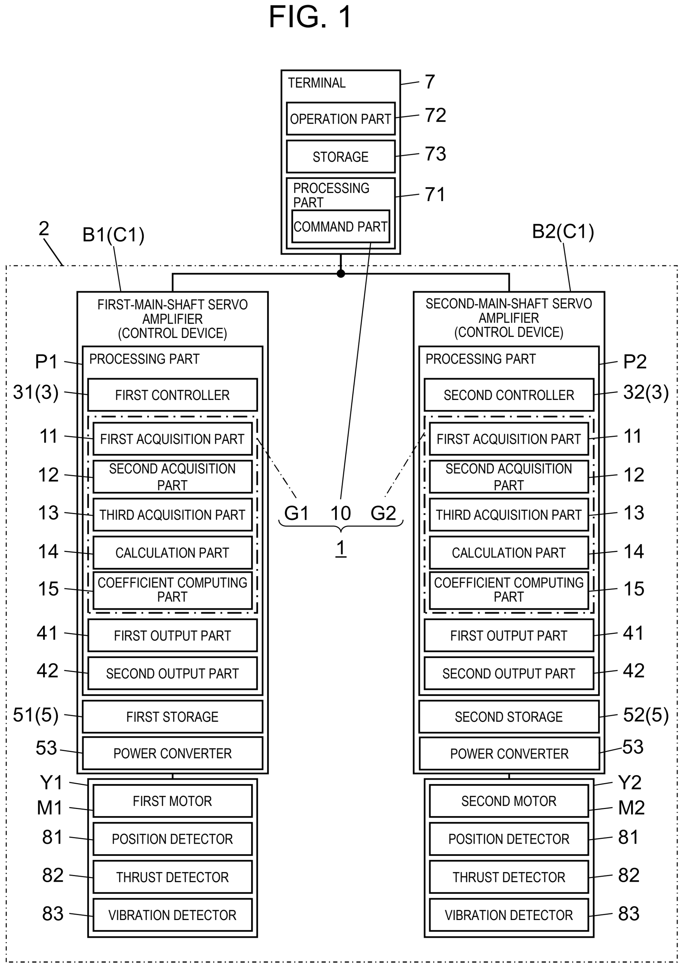

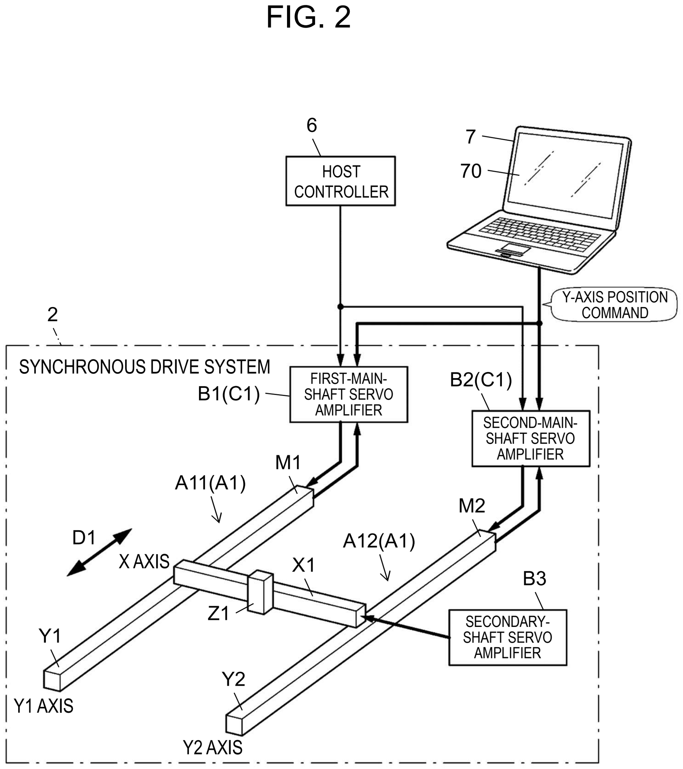

Fig. 1 is a schematic block configuration diagram of measurement system 1 according to an exemplary embodiment and synchronous drive system 2 to which measurement system 1 is applied. Fig. 2 is a schematic diagram of synchronous drive system 2 of the exemplary embodiment and a peripheral configuration thereof. Measurement system 1 (see Fig. 1) according to one aspect is configured to measure the amount of position correction to be applied to synchronous drive system 2 (see Fig. 2). Hereinafter, it is assumed that synchronous drive system 2 is a synchronous drive device (system) having a so-called gantry mechanism as illustrated in Fig. 2. The Y1 axis, the Y2 axis, and the X axis in the gantry mechanism correspond to first main shaft Y1, second main shaft Y2, and sub shaft X1 (see Fig. 2) in the present disclosure, respectively. However, synchronous drive system 2 may be a multi-axis synchronous drive device (system) having a mechanism other than the gantry mechanism.

Synchronous drive system 2 includes: first main shaft Y1 and second main shaft Y2; and first controller 31 and second controller 32. First main shaft Y1 and second main shaft Y2 are connected in parallel to each other via sub shaft X1 (see Fig. 2). First main shaft Y1 and second main shaft Y2 include first motor M1 and second motor M2, respectively. First controller 31 and second controller 32 are configured to control first motor M1 and second motor M2 so that first main shaft Y1 and second main shaft Y2 move in axial direction D1 (see Fig. 2) in synchronization with each other. In the following embodiment, first controller 31 is provided in first-main-shaft servo amplifier B1 (control device C1) that performs control to drive first motor M1 of first main shaft Y1. Meanwhile, second controller 32 is provided in second-main-shaft servo amplifier B2 (control device C1) that performs control to drive second motor M2 of second main shaft Y2.

Hereinafter, it is assumed that first motor M1 and second motor M2 are linear servo motors. Note, however, that first motor M1 and second motor M2 are not limited to linear servo motors, and may be rotary servo motors. In this case, each of first main shaft Y1 and second main shaft Y2 may include, for example, a rotary servo motor, a ball screw mechanism that converts rotational motion transmitted from an output shaft of the rotary servo motor into linear motion, and the like.

Synchronous drive system 2 is, for example, a three-axis drive device. As illustrated in Fig. 2, synchronous drive system 2 further includes sub shaft X1 corresponding to the X axis and a control device (sub-shaft servo amplifier B3) that controls sub shaft X1, and can perform control to drive head Z1, provided on sub shaft X1, along the X axis. Synchronous drive system 2 may further include a motor and a control device for moving head Z1 in the Z-axis direction. Head Z1 may be a robot arm, and synchronous drive system 2 may further include a control device that controls a robot arm.

Synchronous drive system 2 can be applied to a machine for mounting a semiconductor component or the like, a machine for processing a member, a machine for conveying a product or a semi-product, or the like in a facility such as a factory. For example, synchronous drive system 2 can cause head Z1 (robot arm) of sub shaft X1 to pick an object (workpiece), and perform control to drive sub shaft X1, first main shaft Y1, and second main shaft Y2 to move the workpiece in at least one of the X axis and the Y axis (axial direction D1 in Fig. 2).

Meanwhile, it is assumed that an operator performs an operation of assembling various devices of synchronous drive system 2 when synchronous drive system 2 is newly installed or relocated in a facility such as a factory. At this time, even if the operator intends to assemble the devices so that first main shaft Y1 and second main shaft Y2 are parallel to each other, a slight position shift may occur between first main shaft Y1 and second main shaft Y2. Also, a position shift between first main shaft Y1 and second main shaft Y2 may occur by deterioration of synchronous drive system 2 over time. However, such a position shift between the shafts may cause a decrease in position accuracy in synchronous drive control of first main shaft Y1 and second main shaft Y2. For example, in a process of mounting a semiconductor component or the like, the semiconductor component may fail to be mounted at a correct mounting position due to a decrease in position accuracy. Such a position shift can also cause an influence that can occur due to interference between first main shaft Y1 and second main shaft Y2 (deterioration of device due to torsion or the like of first main shaft Y1, second main shaft Y2, or sub shaft X1, for example).

To deal with this, measurement system 1 has the following configuration, and causes synchronous drive system 2 to perform a test operation to measure the amount of position correction. During a normal operation, synchronous drive system 2 corrects the position of at least one of first motor M1 and second motor M2 using the amount of position correction measured by measurement system 1 to offset the position shift between first main shaft Y1 and second main shaft Y2.

Specifically, as illustrated in Fig. 1, measurement system 1 includes: command part 10; first acquisition part 11; second acquisition part 12; and calculation part 14.

Command part 10 is configured to give the same position command to first controller 31 and second controller 32 to cause these parts to control first motor M1 and second motor M2 so as to perform a test operation in which first main shaft Y1 and second main shaft Y2 move to designated positions in synchronization with each other. In the exemplary embodiment described later, it is assumed that the function of command part 10 is provided in terminal 7. However, as described in modifications to be described later, the function of command part 10 may be provided in a device other than terminal 7.

First acquisition part 11 is configured to acquire first information on a first force to be applied to first main shaft Y1 and a second force to be applied to second main shaft Y2 during the test operation. Second acquisition part 12 is configured to acquire second information on the positions of first motor M1 and second motor M2 during the test operation. Calculation part 14 is configured to calculate the amount of position correction of at least one of first motor M1 and second motor M2 in order to correct a position shift between first main shaft Y1 and second main shaft Y2 based on the first information and the second information. In the exemplary embodiment described later, it is assumed that the functions of first acquisition part 11, second acquisition part 12, and calculation part 14 are provided in each of first-main-shaft servo amplifier B1 (control device C1) and second-main-shaft servo amplifier B2 (control device C1). However, as described in the modifications to be described later, at least a part of these functions may be provided in a device other than control device C1. Meanwhile, these functions may be provided only in one of first-main-shaft servo amplifier B1 and second-main-shaft servo amplifier B2. Meanwhile, even if these functions are provided in both first-main-shaft servo amplifier B1 and second-main-shaft servo amplifier B2, some or all of these functions do not necessarily have to be used in one of the main-shaft servo amplifiers.

According to measurement system 1 described above, the amount of position correction to be applied to synchronous drive system 2 is calculated based on the first information on the first force to be applied to first main shaft Y1 and the second force to be applied to second main shaft Y2 and the second information. Therefore, unlike the position control system of PTL 1 in which the correction value is calculated by the position shift between the Y1 axis and the Y2 axis, it is possible not only to improve the accuracy of the drive control but also to suppress the influence that can occur due to interaxial interference (between the Y1 axis and the Y2 axis) such as deterioration of device due to torsion or the like of the axis, for example. Note that, as will be described later, the first force and the second force are assumed to be a thrust along the Y axis for convenience of description, but may include a force (torque) around the Y axis in addition to the thrust.

Meanwhile, a measurement method according to one aspect measures the amount of position correction to be applied to synchronous drive system 2 described above. The measurement method includes a command processing step, a first acquisition processing step, a second acquisition processing step, and a calculation processing step. In the command processing step, the same position command is given to first controller 31 and second controller 32 to cause these parts to control first motor M1 and second motor M2 so as to perform a test operation in which first main shaft Y1 and second main shaft Y2 move to designated positions in synchronization with each other. In the first acquisition processing step, first information on the first force to be applied to first main shaft Y1 and the second force to be applied to second main shaft Y2 during the test operation is acquired. In the second acquisition processing step, second information on the positions of first motor M1 and second motor M2 during the test operation is acquired. In the calculation processing step, the amount of position correction of at least one of first motor M1 and second motor M2 is calculated in order to correct a position shift between first main shaft Y1 and second main shaft Y2 based on the first information and the second information. The above measurement method has an advantage that it is possible to suppress an influence that can occur due to interaxial interference (between the Y1 axis and the Y2 axis).

This measurement method is used on a computer system (measurement system 1). That is, this measurement method can also be embodied by a computer program. A program according to one aspect is a program for causing one or more processors to execute the measurement method described above. The program may be recorded in a non-transitory computer-readable recording medium.

### (Details)

### (1) Overall configuration

Hereinafter, the entire system including measurement system 1, synchronous drive system 2, and a peripheral configuration thereof according to the present exemplary embodiment will be described in detail with reference to Fig. 1 and Fig. 2.

Measurement system 1 is configured to measure the amount of position correction to be applied to synchronous drive system 2. In the present exemplary embodiment, the multiple functions of measurement system 1 are provided in first-main-shaft servo amplifier B1 (control device C1), second-main-shaft servo amplifier B2 (control device C1), and terminal 7 in a dispersed manner. Note that, the peripheral configuration is host controller 6 in the example illustrated in Fig. 2. Host controller 6 may be treated as the configuration of synchronous drive system 2.

In the present disclosure, the operation of synchronous drive system 2 and the like related to the measurement of the amount of position correction in response to a position command from measurement system 1 may be referred to as a "test operation". In addition, the operation of synchronous drive system 2 and the like related to a normal operation of performing processing on an object (workpiece) using the amount of position correction obtained by the measurement of measurement system 1 may be referred to as a "normal operation".

It is assumed that the test operation can be executed after assembling work of various devices of synchronous drive system 2 is performed when synchronous drive system 2 is newly installed or relocated in a facility such as a factory. In addition, it is assumed that the test operation can be executed at the time of periodic maintenance of synchronous drive system 2, after checking and recovery work is conducted due to some failure in synchronous drive system 2, or after replacement of devices or parts in synchronous drive system 2 is performed.

### (2) Synchronous drive system

Synchronous drive system 2 includes: first main shaft Y1; second main shaft Y2; sub shaft X1; head Z1; first-main-shaft servo amplifier B1 (control device C1); second-main-shaft servo amplifier B2 (control device C1); and sub-shaft servo amplifier B3. Hereinafter, for convenience of description, first-main-shaft servo amplifier B1 may be abbreviated as "first amplifier B1", and second-main-shaft servo amplifier B2 may be abbreviated as "second amplifier B2".

First main shaft Y1 and second main shaft Y2 are connected in parallel to each other along axial direction D1 via sub shaft X1. Sub shaft X1 connects first main shaft Y1 and second main shaft Y2 so as to be orthogonal to each of these main shafts.

First main shaft Y1 includes: first motor M1 (linear servo motor); position detector 81 (linear scale); thrust detector 82; and vibration detector 83. Note that, thrust detector 82 of first main shaft Y1 is not an essential configuration and may be omitted as appropriate. First main shaft Y1 may further include a speed sensor that detects the speed of first motor M1, a thrust sensor that detects the thrust of first motor M1, and the like.

In the present exemplary embodiment, as an example, first motor M1 and a load driven by power of first motor M1 are defined as drive system A1. The load may include: sub shaft X1; a connecting portion that connects sub shaft X1 and first motor M1; head Z1; and the like.

Hereinafter, drive system A1 on first main shaft Y1 side may be referred to as first drive system A11. When first motor M1 is the rotary servo motor and is connected to the ball screw mechanism, the rotary servo motor and the ball screw mechanism are also a part of first drive system A11.

Second main shaft Y2 has substantially the same configuration as first main shaft Y1. Second main shaft Y2 includes: second motor M2 (linear servo motor); position detector 81 (linear scale); thrust detector 82; and vibration detector 83. Note that, thrust detector 82 of second main shaft Y2 is not an essential configuration and may be omitted as appropriate. Second main shaft Y2 may further include a speed sensor that detects the speed of second motor M2, a thrust sensor that detects the thrust of second motor M2, and the like.

In the present exemplary embodiment, as an example, second motor M2 and a load driven by power of second motor M2 are defined as drive system A1. The load may include: sub shaft X1; a connecting portion that connects sub shaft X1 and second motor M2; head Z1; and the like.

Hereinafter, drive system A1 on second main shaft Y2 side may be referred to as second drive system A12. When second motor M2 is the rotary servo motor and is connected to the ball screw mechanism, the rotary servo motor and the ball screw mechanism are also a part of second drive system A12.

First main shaft Y1 (first motor M1) directly drives the load along the Y axis (axial direction D1) under the control of first amplifier B1. In addition, second main shaft Y2 (second motor M2) directly drives the load along the Y axis (axial direction D1) under the control of second amplifier B2. Note, however, that first amplifier B1 and second amplifier B2 control first motor M1 and second motor M2 so that first main shaft Y1 and second main shaft Y2 move in axial direction D1 in synchronization with each other.

Although not described in detail here, sub shaft X1 includes a motor (linear servo motor) and a position detector (linear scale). Sub shaft X1 directly drives the load (head Z1) along the X axis under the control of sub-shaft servo amplifier B3.

Position detector 81 of each of first main shaft Y1 and second main shaft Y2 includes an encoder or the like. Each position detector 81 detects a position of a corresponding one of first motor M1 and second motor M2. Position detector 81 of first main shaft Y1 outputs a position detection signal (electric signal) including a detection value related to the position of first motor M1 to first amplifier B1. Position detector 81 of second main shaft Y2 outputs a position detection signal including a detection value related to the position of second motor M2 to second amplifier B2. First amplifier B1 and second amplifier B2 perform control to synchronously drive first motor M1 and second motor M2 to execute a predetermined work operation while performing feedback control based on the position detection signal and an operation control signal (hereinafter simply referred to as a control signal) from host controller 6.

In addition, first amplifier B1 and second amplifier B2 perform control to synchronously drive first motor M1 and second motor M2 to execute a predetermined test operation based on a test control signal (hereinafter simply referred to as a test signal) including a position command to be described later.

In the present exemplary embodiment, a "force applied to the motor" is calculated based on a command value (such as a thrust command value or a torque command value) from first amplifier B1 and second amplifier B2 directed to first motor M1 and second motor M2. However, the force (thrust) applied to each motor may be detected using thrust detector 82 included in a corresponding one of first main shaft Y1 and second main shaft Y2.

Thrust detector 82 of each of first main shaft Y1 and second main shaft Y2 is disposed in a corresponding one of first motor M1 and second motor M2 so as to detect a force applied to the motor. Each thrust detector 82 includes, for example, a piezoelectric force sensor, a magnetostrictive force sensor, a strain gauge force sensor, or the like.

The "force applied to the motor" mentioned here includes not only a stress received from the load when the load is driven, but also a torsion force along the Y axis caused by a stress received from the other motor side via sub shaft X1 due to the position shift between the axes. In short, the "force applied to the motor" may include the thrust along the Y axis. Note that, when the position shift between first main shaft Y1 and second main shaft Y2 includes not only the shift in the Y axis but also the shift in the X axis and the Z axis, the "force applied to the motor" may include a torsion force (torque) about the Y axis. However, in the following description, in order to simplify the description, it is assumed that the "force applied to the motor" is mainly a thrust. For example, the force applied to first motor M1 may include a torsion force along the Y1 axis caused by a stress received from second motor M2 side via sub shaft X1 due to the position shift between the axes. In addition, the force applied to second motor M2 may include a torsion force along the Y2 axis caused by a stress received from first motor M1 side via sub shaft X1 due to the position shift between the axes.

As described above, in the present exemplary embodiment, the thrust applied to first motor M1 and second motor M2 is calculated based on the thrust command value for first motor M1 and second motor M2 and the like. Note that, thrust detector 82 is used as follows. Thrust detector 82 of first main shaft Y1 outputs a thrust detection signal (electric signal), including a detection value related to the trust applied to first motor M1, to first amplifier B1. Thrust detector 82 of second main shaft Y2 outputs a thrust detection signal, including a detection value related to the thrust applied to second motor M2, to second amplifier B2.

Vibration detector 83 of each of first main shaft Y1 and second main shaft Y2 is disposed in drive system A1 so as to detect vibration of corresponding drive system A1 out of first drive system A11 and second drive system A12. Each vibration detector 83 includes, for example, an acceleration sensor, a gyro sensor, or the like. Vibration detector 83 of first main shaft Y1 outputs a vibration detection signal (electric signal) including a detection value related to vibration of first drive system A11 to first amplifier B1. Vibration detector 83 of second main shaft Y2 outputs a vibration detection signal including a detection value related to vibration of second drive system A12 to second amplifier B2.

First amplifier B1 corresponds to control device C1 according to one embodiment. As illustrated in Fig. 1, first amplifier B1 includes: processing part P1; first storage 51 (corresponding to storage 5); and power converter 53. In other words, control device C1 (first amplifier B1) includes storage 5 (first storage 51).

Processing part P1 includes a computer system having one or more processors and memories. At least a part of the function of processing part P1 is implemented by the processor of the computer system executing a program recorded in the memory of the computer system. The program may be recorded in the memory, may be provided through a telecommunication line such as the Internet, or may be recorded in a non-transitory recording medium such as a memory card.

Processing part P1 includes: first controller 31 (corresponding to controller 3); first output part 41; second output part 42; and first measurement processing part G1. In other words, control device C1 (first amplifier B1) includes first output part 41 and second output part 42.

First controller 31 is configured to determine a control value of first drive system A11 in accordance with a control signal related to the Y axis from host controller 6 and a position detection signal (that is, the current position of first motor M1) from position detector 81. The control value may include, for example, a command value of the position of first motor M1 with respect to the Y1 axis, a command value of the thrust of first motor M1, a command value of the speed of first motor M1, and the like. First controller 31 controls the power converter based on the determined control value to adjust the power (drive current) supplied to first motor M1. As a result, first controller 31 drives first main shaft Y1 to a predetermined position on the Y1 axis.

In addition, when a test signal including a position command is input from measurement system 1 (command part 10 to be described later), first controller 31 executes a predetermined test operation. In other words, control device C1 (first amplifier B1) includes first controller 31 (controller 3) to which a position command is input from measurement system 1. First controller 31 (controller 3) controls first motor M1 so as to perform a test operation in which first main shaft Y1 moves to a designated position based on the position command. The position designated in the test operation is set within a prescribed movable range in which the main shaft (Y1, Y2) is movable in the normal operation.

In the present exemplary embodiment, as an example, it is assumed that a single test operation is a movement operation in which the main shafts (first main shaft Y1 and second main shaft Y2) synchronously move from the origin position (start position) on the Y axis to a position (end position) on the positive side of the Y axis designated by the position command. Note that, the start position may be other than the origin position. Hereinafter, the movement range from the start position to the end position in the test operation is referred to as a "correction range". The position command includes, for example, information on the correction range.

The single test operation is not limited to the movement operation as described above. The single test operation may be a movement operation in which the main shafts synchronously move from the origin position (start position) on the Y axis to a position (end position) on the negative side of the Y axis. Alternatively, the single test operation may be a reciprocating operation in which the main shafts synchronously move from the origin position (start position) on the Y axis to the position on the positive side of the Y axis and then return to the origin position (end position) again. Still alternatively, the single test operation may include reciprocating operations on both the positive side and the negative side in which the main shafts synchronously move from the origin position (start position) on the Y axis to the position on the positive side of the Y axis, then return to the origin position again, then move to the position on the negative side of the Y axis, and then return to the origin position (end position) again.

First output part 41 of processing part P1 outputs first information on the force (thrust) applied to the main shaft during the test operation. Specifically, processing part P1 calculates a first thrust value based on the thrust command value for first motor M1 and the like. Processing part P1 generates first information including the first thrust value, and causes first output part 41 to output the first information. The thrust command value for first motor M1 is one of parameters of a control value that can be determined based on the position detection signal (that is, the current position of first motor M1) from position detector 81, the current speed of first motor M1, and the like. Alternatively, in response to an input of a thrust detection signal from thrust detector 82 of first main shaft Y1, processing part P1 may generate first information including the first thrust value based on a detection value included in the thrust detection signal, and output the first information from first output part 41. Here, first output part 41 outputs the first information to first measurement processing part G1 mounted in processing part P1. Note that, first measurement processing part G1 is a part of measurement system 1, and details thereof will be described later.

Second output part 42 of processing part P1 outputs second information on the position of the motor during the test operation. Specifically, in response to an input of a position detection signal from position detector 81 of first main shaft Y1 during the test operation, processing part P1 generates second information including the position of first motor M1 based on a detection value included in the position detection signal, and outputs the second information from second output part 42. Here, second output part 42 outputs the second information to first measurement processing part G1 mounted in processing part P1. The detection value of the position detection signal is used not only for the test operation but also for determining a control value in the normal operation.

In addition, processing part P1 performs excitation processing during the test operation, and applies excitation forces of various vibration frequencies within a predetermined range to first drive system A11 in the drive control of first motor M1. In response to an input of the vibration detection signal corresponding to the excitation force from vibration detector 83 of first main shaft Y1, processing part P1 outputs information on the detection value included in the vibration detection signal to first measurement processing part G1.

First storage 51 includes an electrically rewritable nonvolatile semiconductor memory such as a flash memory. First storage 51 is configured to be able to store (house) correction information including the amount of position correction calculated by the measurement system (calculation part 14 to be described later). The correction information stored in first storage 51 can be updated by processing part P1.

Second amplifier B2 corresponds to control device C1 according to one embodiment. In the present exemplary embodiment, as an example, second amplifier B2 has substantially the same function as first amplifier B1. As illustrated in Fig. 1, second amplifier B2 includes: processing part P2; second storage 52 (corresponding to storage 5); and power converter 53. In other words, control device C1 (second amplifier B2) includes storage 5 (second storage 52).

Processing part P2 includes a computer system having one or more processors and memories. At least a part of the function of processing part P2 is implemented by the processor of the computer system executing a program recorded in the memory of the computer system. The program may be recorded in the memory, may be provided through a telecommunication line such as the Internet, or may be recorded in a non-transitory recording medium such as a memory card.

Processing part P2 includes: second controller 32 (corresponding to controller 3); first output part 41; second output part 42; and second measurement processing part G2. In other words, control device C1 (second amplifier B2) includes first output part 41 and second output part 42.

Second controller 32 is configured to determine a control value of second drive system A12 in accordance with a control signal related to the Y axis from host controller 6 and a position detection signal (that is, the current position of second motor M2) from position detector 81. The control value may include, for example, a command value of the position of second motor M2 with respect to the Y2 axis, a command value of the thrust of second motor M2, a command value of the speed of second motor M2, and the like. Second controller 32 controls the power converter based on the determined control value to adjust the power (drive current) supplied to second motor M2. As a result, second controller 32 drives second main shaft Y2 to a predetermined position on the Y2 axis.

In addition, when a test signal including a position command is input from measurement system 1 (command part 10 to be described later), second controller 32 executes a predetermined test operation. In other words, control device C1 (second amplifier B2) includes second controller 32 (controller 3) to which a position command is input from measurement system 1. Second controller 32 (controller 3) controls second motor M2 so as to perform a test operation in which second main shaft Y2 moves to a designated position based on the position command.

First output part 41 of processing part P2 outputs first information on the force (thrust) applied to the main shaft during the test operation. Specifically, processing part P2 calculates a second thrust value based on the thrust command value for second motor M2 and the like. Processing part P2 generates first information including the second thrust value, and causes first output part 41 to output the first information. The thrust command value for second motor M2 is one of parameters of a control value that can be determined based on the position detection signal (that is, the current position of second motor M2) from position detector 81, the current speed of second motor M2, and the like. Alternatively, in response to an input of a thrust detection signal from thrust detector 82 of second main shaft Y2, processing part P2 may generate first information including the second thrust value based on a detection value included in the thrust detection signal, and output the first information from first output part 41. Here, first output part 41 outputs the first information to second measurement processing part G2 mounted in processing part P2. Note that, second measurement processing part G2 is a part of measurement system 1, and details thereof will be described later.

Second output part 42 of processing part P2 outputs second information on the position of the motor during the test operation. Specifically, in response to an input of a position detection signal from position detector 81 of second main shaft Y2 during the test operation, processing part P2 generates second information including the position of second motor M2 based on a detection value included in the position detection signal, and outputs the second information from second output part 42. Here, second output part 42 outputs the second information to second measurement processing part G2 mounted in processing part P2. The detection value of the position detection signal is used not only for the test operation but also for determining a control value in the normal operation.

In addition, processing part P2 performs excitation processing during the test operation, and applies excitation forces of various vibration frequencies within a predetermined range to second drive system A12 in the drive control of second motor M2. In response to an input of the vibration detection signal corresponding to the excitation force from vibration detector 83 of second main shaft Y2, processing part P2 outputs information on the detection value included in the vibration detection signal to second measurement processing part G2.

Second storage 52 includes an electrically rewritable nonvolatile semiconductor memory such as a flash memory. Second storage 52 is configured to be able to store (house) correction information including the amount of position correction calculated by the measurement system (calculation part 14 to be described later). The correction information stored in second storage 52 can be updated by processing part P2.

First amplifier B1 and second amplifier B2 configured as described above receive a synchronized control signal from host controller 6, and synchronously drive first main shaft Y1 and second main shaft Y2 to a predetermined position. In addition to this synchronous drive, sub-shaft servo amplifier B3 also determines a control value of the drive system according to a control signal related to the X axis from host controller 6 and a position detection signal from the position detector, and drives sub shaft X1 to a predetermined position on the X axis. As a result, synchronous drive system 2 performs drive control of the X-Y coordinate position of head Z1.

In particular, controller 3 controls a corresponding motor out of first motor M1 and second motor M2 based on the correction information stored in storage 5 during the test operation or the normal operation.

Specifically, for example, first controller 31 of first amplifier B1 corrects the position of first motor M1 based on the amount of position correction stored in first storage 51 in the normal operation. First controller 31 determines a control value based on the corrected position (correction position), adjusts the drive current, and executes control of first motor M1.

Meanwhile, for example, second controller 32 of second amplifier B2 corrects the position of second motor M2 based on the amount of position correction stored in second storage 52 in the normal operation. Second controller 32 determines a control value based on the corrected position, adjusts the drive current, and executes control of second motor M2.

In addition, first controller 31 and second controller 32 may perform correction based on the latest amount of position correction stored in storage 5 not only in the normal operating but also in the test operation. Although details will be described later, the test operation may be repeatedly executed in order to optimize the amount of position correction. In this case, also in the test operation, the corresponding motor may be controlled by being corrected based on the amount of position correction stored in storage 5. Note that, when the test operation is executed for the first time after the device is assembled at the time of newly installing synchronous drive system 2, correction information may be not yet stored in storage 5 (first storage 51, second storage 52). In this case, controller 3 (first controller 31, second controller 32) controls the corresponding motor without the correction information in the test operation.

### (3) Host controller

Host controller 6 includes a computer system having one or more processors and memories. At least a part of the function of host controller 6 is implemented by the processor of the computer system executing a program recorded in the memory of the computer system. The program may be recorded in the memory, may be provided through a telecommunication line such as the Internet, or may be recorded in a non-transitory recording medium such as a memory card.

Host controller 6 is configured using, for example, a programmable logic controller (PLC) or the like, and is configured to control the operations of first amplifier B1, second amplifier B2, and sub-shaft servo amplifier B3. Host controller 6 is communicably connected to first amplifier B1, second amplifier B2, and sub-shaft servo amplifier B3, and outputs a control signal to these servo amplifiers. Host controller 6 thereby controls the operations of first amplifier B1, second amplifier B2, and sub-shaft servo amplifier B3. The communication method may be wireless or wired. The control signal includes data for designating the X-Y coordinate position and the operation of the load including head Z1 and the like.

### (4) Terminal

In the present exemplary embodiment, as an example, it is assumed that terminal 7 is a notebook computer as illustrated in Fig. 2. However, terminal 7 may be a tablet terminal, a mobile terminal such as a smartphone, a desktop personal computer, or a server device.

Terminal 7 is communicably connected to first amplifier B1 and second amplifier B2. For example, it is assumed that terminal 7 is not connected to first amplifier B1 and second amplifier B2 during the normal operation, and is connected to first amplifier B1 and second amplifier B2 only when the test operation is performed.

As illustrated in Fig. 1, terminal 7 includes: display 70 (see Fig. 2); processing part 71; operation part 72; and storage 73.

Processing part 71 includes a computer system having one or more processors and memories. At least a part of the function of processing part 71 is implemented by the processor of the computer system executing a program recorded in the memory of the computer system. The program may be recorded in the memory, may be provided through a telecommunication line such as the Internet, or may be recorded in a non-transitory recording medium such as a memory card.

Processing part 71 includes command part 10. Command part 10 is a part of measurement system 1. In other words, processing part 71 has a function as command part 10 of measurement system 1. In terminal 7, dedicated application software for communicating with first amplifier B1 and second amplifier B2 and further providing the function of command part 10 is installed in advance.

Command part 10 outputs (transmits) the same position command (test signal) related to the positions of first main shaft Y1 and second main shaft Y2 on the Y axis to first amplifier B1 and second amplifier B2. First amplifier B1 and second amplifier B2 control first motor M1 and second motor M2 so that first main shaft Y1 and second main shaft Y2 perform the test operation in synchronization with each other based on the input test signal. In other words, command part 10 generates a test signal serving as a trigger for starting the test operation, and outputs (transmits) the test signal to first amplifier B1 and second amplifier B2.

Display 70 is configured by, for example, a liquid crystal display or an organic electro luminescence (EL) display. Display 70 may be configured by a touch panel display.

Operation part 72 includes, for example, one or more of a mouse, a keyboard, a pointing device, and the like. The operator operates operation part 72 to input information while referring to information displayed on display 70. For example, in order to start the test operation, the operator activates dedicated application software using operation part 72 and performs an input operation related to execution of outputting the position command to first amplifier B1 and second amplifier B2. In a case where display 70 is configured by a touch panel display, the display also has a function as operation part 72.

Storage 73 includes an electrically rewritable nonvolatile semiconductor memory such as a flash memory. Storage 73 stores (houses), for example, information on a position command and the like. Storage 73 may be a memory of processing part 71.

### (5) Measurement system

Hereinafter, the configuration of measurement system 1 will be described in detail.

Measurement system 1 includes a computer system having one or more processors and memories. At least a part of the function of measurement system 1 is implemented by the processor of the computer system executing a program recorded in the memory of the computer system. The program may be recorded in the memory, may be provided through a telecommunication line such as the Internet, or may be recorded in a non-transitory recording medium such as a memory card.

As illustrated in Fig. 1, measurement system 1 includes: command part 10; first measurement processing part G1; and second measurement processing part G2. However, in the present exemplary embodiment, as an example, the functions of command part 10, first measurement processing part G1, and second measurement processing part G2 are provided in multiple devices in a distributed manner. In other words, the function of command part 10 is implemented in processing part 71 of terminal 7. On the other hand, the function of first measurement processing part G1 is implemented in processing part P1 of first amplifier B1 (control device C1), and the function of second measurement processing part G2 is implemented in processing part P2 of second amplifier B2 (control device C1).

First measurement processing part G1 includes: first acquisition part 11; second acquisition part 12; third acquisition part 13; calculation part 14; and coefficient computing part 15. In other words, first measurement processing part G1 has functions of: first acquisition part 11; second acquisition part 12; third acquisition part 13; calculation part 14; and coefficient computing part 15. Accordingly, in other words, control device C1 of the present exemplary embodiment has at least some functions (here, first acquisition part 11, second acquisition part 12, and calculation part 14) among the functions related to command part 10, first acquisition part 11, second acquisition part 12, and calculation part 14 in measurement system 1.

Second measurement processing part G2 has substantially the same function (first acquisition part 11, second acquisition part 12, third acquisition part 13, calculation part 14, and coefficient computing part 15) as first measurement processing part G1.

First acquisition part 11 acquires, from first output part 41, first information on the first force (for example, thrust) to be applied to first main shaft Y1 and the second force (for example, thrust) to be applied to second main shaft Y2 during the test operation. In the present exemplary embodiment, the function of first acquisition part 11 is distributed into first measurement processing part G1 and second measurement processing part G2. In other words, first acquisition part 11 of first measurement processing part G1 acquires the first information on the calculated first thrust value as the first force to be applied to first main shaft Y1 during the test operation. Alternatively, first acquisition part 11 of first measurement processing part G1 may acquire the first information on the first thrust value to be applied to first main shaft Y1 during the test operation based on the detection value included in the thrust detection signal from thrust detector 82 of first main shaft Y1. First acquisition part 11 of first measurement processing part G1 inputs the first information to calculation part 14 of first measurement processing part G1.

In addition, first acquisition part 11 of second measurement processing part G2 acquires the first information on the calculated second thrust value as the second force to be applied to second main shaft Y2 during the test operation. Alternatively, first acquisition part 11 of second measurement processing part G2 may acquire the first information on the second thrust value to be applied to second main shaft Y2 during the test operation based on the detection value included in the thrust detection signal from thrust detector 82 of second main shaft Y2. First acquisition part 11 of second measurement processing part G2 inputs the first information to calculation part 14 of second measurement processing part G2.

Further, each of first amplifier B1 and second amplifier B2 has a function of transmitting the first information acquired by first acquisition part 11 of a corresponding one of first amplifier B1 and second amplifier B2 directly or via terminal 7 or the like to the other main-shaft servo amplifier. The communication method may be wireless or wired.

Second acquisition part 12 acquires the second information on the positions of first motor M1 and second motor M2 during the test operation from second output part 42. In the present exemplary embodiment, the function of second acquisition part 12 is distributed into first measurement processing part G1 and second measurement processing part G2. In other words, second acquisition part 12 of first measurement processing part G1 acquires the second information on the position of first motor M1 during the test operation based on the detection value included in the position detection signal from position detector 81 of first main shaft Y1. Second acquisition part 12 of first measurement processing part G1 inputs the second information to calculation part 14 of first measurement processing part G1.

In addition, second acquisition part 12 of second measurement processing part G2 acquires the second information on the position of second motor M2 during the test operation based on the detection value included in the position detection signal from position detector 81 of second main shaft Y2. Second acquisition part 12 of second measurement processing part G2 inputs the second information to calculation part 14 of second measurement processing part G2.

Further, each of first amplifier B1 and second amplifier B2 has a function of transmitting the second information acquired by second acquisition part 12 of a corresponding one of first amplifier B1 and second amplifier B2 directly or via terminal 7 or the like to the other main-shaft servo amplifier. The communication method may be wireless or wired.

Third acquisition part 13 is configured to acquire third information on the frequency characteristic of vibration in drive system A1 including each of first motor M1 and second motor M2. In the present exemplary embodiment, the function of third acquisition part 13 is distributed into first measurement processing part G1 and second measurement processing part G2. In other words, third acquisition part 13 of first measurement processing part G1 acquires the third information on the frequency characteristic (such as a resonance frequency and an antiresonance frequency) of the vibration in first drive system A11 including first motor M1 based on the detection value included in the vibration detection signal from vibration detector 83 of first main shaft Y1. Third acquisition part 13 of first measurement processing part G1 inputs the third information to calculation part 14 of first measurement processing part G1.

In addition, third acquisition part 13 of second measurement processing part G2 acquires the third information on the frequency characteristic (such as a resonance frequency and an antiresonance frequency) of the vibration in second drive system A12 including second motor M2 based on the detection value included in the vibration detection signal from vibration detector 83 of second main shaft Y2. Third acquisition part 13 of second measurement processing part G2 inputs the third information to calculation part 14 of second measurement processing part G2.

Further, each of first amplifier B1 and second amplifier B2 has a function of transmitting the third information acquired by third acquisition part 13 of a corresponding one of first amplifier B1 and second amplifier B2 directly or via terminal 7 or the like to the other main-shaft servo amplifier. The communication method may be wireless or wired.

For example, third acquisition part 13 performs frequency analysis (Fast Fourier Transform: FFT) on each piece of time-series data of the detection value included in the vibration detection signal from vibration detector 83, and obtains a difference thereof to acquire (measure) the resonance frequency and the antiresonance frequency of corresponding drive system A1.

Meanwhile, it is not essential to use vibration detector 83 as a means for obtaining the frequency characteristic of vibration. In other words, a method for measuring the frequency characteristic of vibration is not particularly limited. For example, the frequency characteristic of vibration may be indirectly measured based on output information (actual measurement values of motor speed, thrust, and the like) from first drive system A11 and second drive system A12 with respect to input information (command values of motor speed, thrust, and the like) from first amplifier B1 and second amplifier B2 to first drive system A11 and second drive system A12.

In addition, the frequency of vibration to be applied by the above-described vibration excitation processing is not particularly limited. For example, a signal including all frequency components may be generated and given to first drive system A11 and second drive system A12 (measurement using white noise). Alternatively, a signal having a waveform whose frequency changes with time may be generated and given to first drive system A11 and second drive system A12 (measurement using sinusoidal sweep). Still alternatively, a signal having a waveform obtained by synthesizing multiple sine waves within a predetermined frequency range may be generated and given to first drive system A11 and second drive system A12 (measurement using multisine).

Measurement system 1 may separately execute the test operation for obtaining the first information (thrust) and the test operation for obtaining the frequency characteristic (for example, using white noise) at different timings.

Calculation part 14 calculates the amount of correction regarding the position of at least one of first motor M1 and second motor M2, that is, the amount of position correction in order to correct a position shift between first main shaft Y1 and second main shaft Y2 based on the first information and the second information (execution of correction amount measurement processing). Calculation part 14 stores (newly adds or updates) the calculated amount of position correction in storage 5 (of the own device).

In the present exemplary embodiment, the function of calculation part 14 is provided in both first measurement processing part G1 and second measurement processing part G2. Thus, calculation part 14 of first measurement processing part G1 can execute the correction amount measurement processing for the position of first motor M1, and calculation part 14 of second measurement processing part G2 can execute the correction amount measurement processing for the position of second motor M2.

For example, the amount of position correction may be individually calculated by each of first amplifier B1 and second amplifier B2 in one test operation. In this case, calculation part 14 of first measurement processing part G1 can calculate the amount of position correction of first motor M1 based on the position of second motor M2 in the second information acquired from second amplifier B2, and store the amount of position correction in first storage 51. In addition, calculation part 14 of second measurement processing part G2 can calculate the amount of position correction of second motor M2 based on the position of first motor M1 in the second information acquired from first amplifier B1, and store the amount of position correction in second storage 52. However, when the amount of position correction is individually calculated by each of first amplifier B1 and second amplifier B2 in this manner, adjustment of the motor position may not be easy when synchronous drive system 2 is viewed on the whole.

Thus, in one test operation, only one of calculation part 14 of first measurement processing part G1 and calculation part 14 of second measurement processing part G2 may be caused to execute the correction amount measurement processing, and the other calculation part 14 may be caused to be in a pause state in which no correction amount measurement processing is executed. In other words, with reference to the position of one of first motor M1 and second motor M2, calculation part 14 may calculate the amount of position correction of the other motor. For example, only calculation part 14 of first measurement processing part G1 may be caused to execute the correction amount measurement processing, and calculation part 14 may calculate the amount of correction (amount of position correction) regarding the position of first motor M1 with reference to the position of second motor M2 in the second information acquired from second amplifier B2.

The operator may operate operation part 72 of terminal 7 to designate which of first amplifier B1 and second amplifier B2 is caused to calculate the amount of position correction, and the designation information may be included in the test signal output from terminal 7.

Next, an example of a specific calculation method of the amount of position correction will be described.

Calculation part 14 obtains a difference value between the first force (first thrust value) and the second force (second thrust value) acquired at the same time, and multiplies the difference value by a correction coefficient to calculate the amount of position correction. However, the amount of position correction does not necessarily have to be obtained from the difference value between the first force (first thrust value) and the second force (second thrust value) acquired at the same time. For example, calculation part 14 may obtain the amount of position correction from a difference value between the first force and the second force in terms of the amount of change, an average value, a maximum value, a minimum value, a median value, or the like in sampling data within a predetermined period.

The correction coefficient by which the difference value is multiplied may be a predetermined value stored in storage 5. Measurement system 1 of the present exemplary embodiment has a function of calculating this correction coefficient. In other words, coefficient computing part 15 is configured to calculate the correction coefficient based on the load mass of each of first main shaft Y1 and second main shaft Y2 and the third information. Coefficient computing part 15 calculates the correction coefficient in response to an operation command received from calculation part 14, for example.

In the present exemplary embodiment, the function of coefficient computing part 15 is provided in both first amplifier B1 and second amplifier B2. Coefficient computing part 15 of first amplifier B1 uses the frequency characteristic in the third information acquired by third acquisition part 13 of first amplifier B1 and the frequency characteristic in the third information acquired from second amplifier B2. Coefficient computing part 15 of second amplifier B2 uses the frequency characteristic in the third information acquired by third acquisition part 13 of first amplifier B1 and the frequency characteristic in the third information acquired from first amplifier B1.

Here, the correction coefficient indicates the magnitude of coupling rigidity between first main shaft Y1 and second main shaft Y2, and this value increases as the load mass and the vibration frequency characteristics (resonance frequency, antiresonance frequency) of each drive system A1 increase. As a result, coefficient computing part 15 calculates the correction coefficient using, for example, resonance frequency f1, antiresonance frequency f2, and function F(f1, f2, M) of load mass M for first drive system A11 and second drive system A12. Each of first amplifier B1 and second amplifier B2 stores the load mass of drive system A1 corresponding to the own device in storage 5 of the own device, and when transmitting the third information to the other main-shaft servo amplifier, transmits the third information including information on the load mass. Alternatively, the load mass of each drive system A1 may be input from terminal 7.

Measurement system 1 acquires the first information, the second information, and the third information at any time at a sampling period during the test operation, and calculation part 14 calculates the amount of position correction for each sampling period (or for each interval longer than the sampling period), for example. In short, calculation part 14 calculates multiple amounts of position correction related to multiple positions of motor (M1 or M2) moving during the test operation. Calculation part 14 stores the multiple amounts of position correction thus calculated in storage 5 in, for example, a table format as correction information. The amounts of position correction are not necessary to be stored in a table format as long as the multiple positions and the multiple amounts of position correction are stored in storage 5 in a one-to-one correspondence manner.

The correction information stored in storage 5 by measurement system 1 can include, in addition to the information on the amount of position correction, information on a difference value (thrust difference) between the first force (first thrust value) and the second force (second thrust value), information on a correction coefficient, information on a correction position, and information on a vibration frequency characteristic, for example.

### (6) Operation of measurement system (correction amount measurement processing)

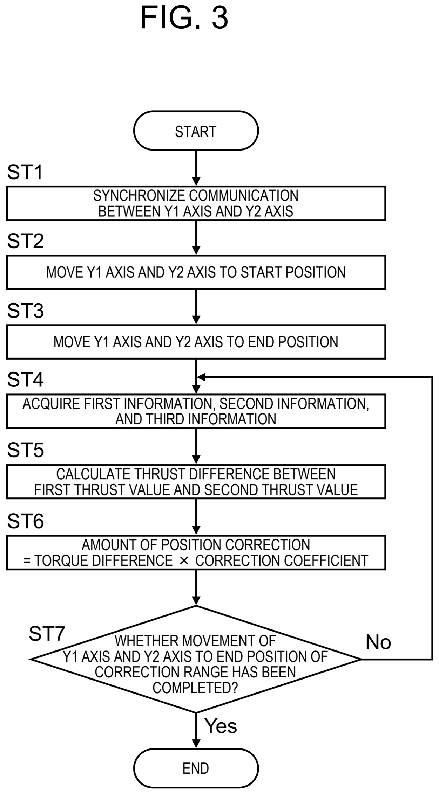

Hereinafter, a series of flow of operation including correction amount measurement processing in measurement system 1 will be described with reference to Fig. 3. Fig. 3 is a flowchart for describing an operation related to the correction amount measurement processing in measurement system 1 of the exemplary embodiment. The flowchart illustrated in Fig. 3 is merely an example of the operation flow related to measurement system 1, and the order of kinds of processing may be appropriately changed, or the processing may be appropriately added or omitted. In Fig. 3, first main shaft Y1 and second main shaft Y2 are simply referred to as a Y1 axis and a Y2 axis, respectively. Hereinafter, it is assumed that measurement system 1 causes only calculation part 14 of first amplifier B1 to execute the correction amount measurement processing, and calculation part 14 of first amplifier B1 calculates the amount of position correction of first motor M1 based on the position of second motor M2 in the second information from second amplifier B2.

For example, it is assumed that the operator has finished an operation of assembling various devices of synchronous drive system 2 when synchronous drive system 2 is newly installed in a facility such as a factory. However, even if the operator intends to assemble the devices so that first main shaft Y1 and second main shaft Y2 are parallel to each other, a slight position shift may occur between first main shaft Y1 and second main shaft Y2. The operator connects terminal 7 to first amplifier B1 and second amplifier B2 so that terminal 7 can communicate with first amplifier B1 and second amplifier B2 (either wireless connection or wired connection).

The operator starts dedicated application software on terminal 7, and performs an input operation for transmitting a test signal serving as a trigger for executing the test operation. As a result, command part 10 (part of measurement system 1) of terminal 7 transmits the test signal of the synchronized position command to first amplifier B1 and second amplifier B2 (ST1: synchronize communication between Y1 axis and Y2 axis). The step of transmitting the test signal of the position command corresponds to the command processing step of the measurement method according to the exemplary embodiment.

First amplifier B1 (first controller 31) and second amplifier B2 (second controller 32) control first motor M1 and second motor M2 to execute the test operation (movement operation from the start position to the end position of the correction range) based on the position command. In other words, first controller 31 and second controller 32 move first main shaft Y1 and second main shaft Y2 to the start position of the correction range designated by the position command (ST2). Then, first controller 31 and second controller 32 start moving first main shaft Y1 and second main shaft Y2 to the end position of the correction range designated by the position command (ST3).

Measurement system 1 acquires the first information (thrust), the second information (position), and the third information (vibration frequency characteristic) during the test operation, that is, during the process in which first main shaft Y1 and second main shaft Y2 continue to move from the start position to the end position in synchronization with each other (ST4). The step of acquiring the first information and the step of acquiring the second information respectively correspond to the first acquisition processing step and the second acquisition processing step of the measurement method according to the exemplary embodiment.

Measurement system 1 (calculation part 14 of first amplifier B1) executes the correction amount measurement processing and calculates a difference value (thrust difference) between the first force (first thrust value) to be applied to first main shaft Y1 and the second force (second thrust value) to be applied to second main shaft Y2 (ST5). Further, in the correction amount measurement processing, measurement system 1 (coefficient computing part 15 of first amplifier B1) calculates the correction coefficient, and measurement system 1 (calculation part 14 of first amplifier B1) multiplies the thrust difference by the correction coefficient to calculate the amount of position correction (ST6). The step of calculating the amount of position correction corresponds to the calculation processing step of the measurement method according to the exemplary embodiment.

If the movement of first main shaft Y1 and second main shaft Y2 to the end positions of both main shafts has been completed (ST7: Yes), measurement system 1 stores the multiple amounts of position correction related to the multiple positions calculated for each sampling period or an interval longer than the sampling period in storage 5 in a table format as correction information. In other words, calculation part 14 of first amplifier B1 stores information on the multiple amounts of position correction related to the multiple positions of first motor M1 in first storage 51 of first amplifier B1. Then, measurement system 1 ends the test operation. Measurement system 1 repeats steps ST4 to ST6 until the movement of both main shafts to the end positions is completed (ST7: No). That is, measurement system 1 repeats the correction amount measurement processing of calculating the amount of position correction in the process in which first main shaft Y1 and second main shaft Y2 continue to move from the start position to the end position in synchronization with each other. In measurement system 1 of the present exemplary embodiment, the amount of position correction can be measured by executing the continuous movement without temporarily stopping first main shaft Y1 and second main shaft Y2 during the movement from the start position to the end position.

Measurement system 1 may display the correction information stored in storage 5 on display 70 of terminal 7 so that the operator can visually check the correction information. The operator may manually correct a part of the correction information on terminal 7 using operation part 72. In the above operation example, in response to an input operation of the operator, terminal 7 may cause first amplifier B1 to update the correction information stored in first storage 51 of first amplifier B1.

After completing the test operation and checking the correction information, the operator disconnects terminal 7 connected to first amplifier B1 and second amplifier B2.

Note that, in synchronous drive system 2, during the normal operation, first amplifier B1 uses the correction information including the amount of position correction and the like stored in first storage 51 of first amplifier B1. During the normal operation, first amplifier B1 corrects the position of first motor M1 so as to correct the position shift between first main shaft Y1 and second main shaft Y2 with reference to the correction information. For example, upon receiving a command from host controller 6 to move first motor M1 from the first position to the second position during the normal operation, first controller 31 determines a control value based on the correction position (the position to which the amount of position correction is applied) corresponding to each position from the first position to the second position, and controls the power converter to adjust the power (drive current) to be supplied to first motor M1.

### (7) Operation of measurement system (correction amount optimization processing)

Meanwhile, in the column of "(6) Operation of measurement system (correction amount measurement processing)" described above, as an example, measurement system 1 stores the amount of position correction (correction information) calculated by performing the test operation once in storage 5 and ends the processing. However, measurement system 1 may be configured to continuously perform the test operation again while executing the correction amount measurement processing in consideration of the amount of position correction (correction information) stored in storage 5 to optimize the amount of position correction (execution of the correction amount optimization processing). Specifically, as the correction amount optimization processing, measurement system 1 repeatedly performs the test operation and the correction amount measurement processing until a specific condition is satisfied. As an example, the "specific condition" means that the difference between the amount of position correction calculated in the N-th test operation (N is an integer of 1 or more) and the amount of position correction calculated in the (N+1)-th test operation is equal to or less than a threshold. The amount of position correction of the N-th test operation and the amount of position correction of the (N+1)-th test operation to be compared may be a sum or an average value of multiple amounts of position correction for multiple positions, a maximum value of multiple amounts of position correction, or the amount of position correction for a certain same position.

In the present exemplary embodiment, it is assumed that measurement system 1 is configured to be able to select validity or invalidity of the correction amount optimization processing through, for example, terminal 7. If the invalidity of the correction amount optimization processing is selected, measurement system 1 executes the operation flow as described in the column "(6) Operation of measurement system (correction amount measurement processing) " described above. If the validity of the correction amount optimization processing is selected, measurement system 1 executes an operation flow to be described later.

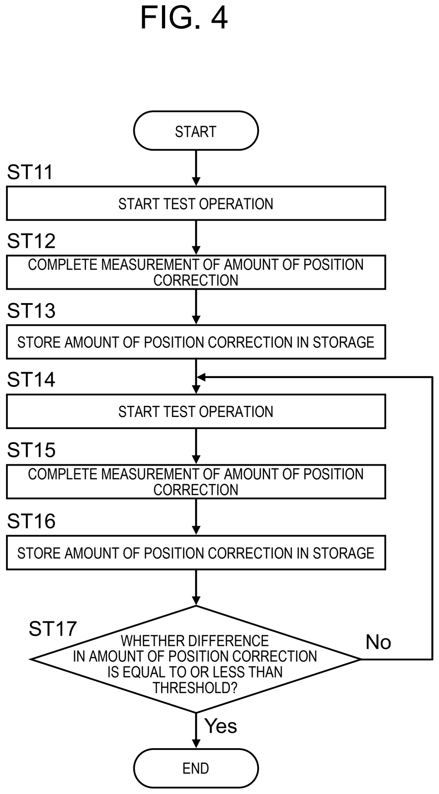

Hereinafter, the correction amount optimization processing will be described with reference to Fig. 4. Fig. 4 is a flowchart for describing an operation related to the correction amount optimization processing in measurement system 1 of the exemplary embodiment. The flowchart illustrated in Fig. 4 is merely an example of the operation flow related to measurement system 1, and the order of kinds of processing may be appropriately changed, or the processing may be appropriately added or omitted. Note that, the operation flow related to calculation of the amount of position correction is the same as the operation flow described in the column "(6) Operation of measurement system (correction amount measurement processing) " described above, and thus the detailed description thereof will be appropriately omitted here.

The operator starts dedicated application software on terminal 7, and performs an input operation for transmitting a test signal serving as a trigger for executing the test operation. At this time, for example, the operator designates "valid" of the correction amount optimization processing using operation part 72, so that the test signal including this designation information is generated. Command part 10 of terminal 7 transmits the test signal of the synchronized position command to first amplifier B1 and second amplifier B2. First amplifier B1 and second amplifier B2 to which the test signal has been input start the test operation (ST11), and measurement system 1 (calculation part 14 of first amplifier B1) executes the correction amount optimization processing and the correction amount measurement processing.

Then, measurement system 1 (calculation part 14 of first amplifier B1) completes the measurement of the amount of position correction for the first test operation (ST12). Calculation part 14 of first amplifier B1 stores information on the multiple amounts of position correction related to the multiple positions of first motor M1 related to the first test operation in first storage 51 (storage 5) of first amplifier B1 (ST13).

Subsequently, first amplifier B1 and second amplifier B2 start the second test operation (ST14). First amplifier B1 determines a control value at a position corrected based on the latest amount of position correction (the amount of position correction of the first test operation) stored in first storage 51, and controls first motor M1.

Then, measurement system 1 (calculation part 14 of first amplifier B1) completes the measurement of the amount of position correction for the second test operation (ST15). Calculation part 14 of first amplifier B1 stores information on the multiple amounts of position correction related to the multiple positions of first motor M1 related to the second test operation in first storage 51 (storage 5) of first amplifier B1 (ST16).

Here, measurement system 1 (for example, calculation part 14) determines whether or not the specific condition is satisfied, that is, whether or not the difference between the amount of position correction of the test operation of the previous time (here, the first time) and the amount of position correction of the test operation of this time (here, the second time) is equal to or less than the threshold (ST17). If the specific condition is satisfied, that is, if the difference is equal to or less than the threshold (ST17: Yes), measurement system 1 determines the amount of position correction of the latest test operation as the optimum amount of position correction. Then, measurement system 1 ends the correction amount optimization processing without further performing the test operation and the measurement of the amount of position correction. On the other hand, if the specific condition is not satisfied, that is, if the difference is larger than the threshold (ST17: No), measurement system 1 returns to step ST14 and starts the next test operation.

Measurement system 1 may display the correction information on display 70 of terminal 7 so that the operator can visually check the correction information including the optimum amount of position correction and the like. The operator may manually correct a part of the correction information on terminal 7 using operation part 72. For example, in response to an input operation of the operator, terminal 7 may update the optimum amount of position correction (correction information) stored in first storage 51 of first amplifier B1.

Note that, in synchronous drive system 2, during the normal operation, first amplifier B1 uses the optimum amount of position correction (correction information) stored in first storage 51 of first amplifier B1.

### (8) Advantages

As described above, according to measurement system 1 of the present exemplary embodiment, the amount of position correction to be applied to synchronous drive system 2 is calculated based on the first information (for example, thrust) on the first force to be applied to first main shaft Y1 and the second force to be applied to second main shaft Y2 and the second information (position). For example, synchronous drive system 2 can reduce an interference of the force by performing control to drive first motor M1 and second motor M2 while applying the amount of position correction during the normal operation. Therefore, unlike the position control system disclosed in PTL 1 in which the correction value is calculated by the position shift between the Y1 axis and the Y2 axis, it is possible not only to improve the accuracy of the drive control but also to suppress the influence that can occur due to interaxial interference (between the Y1 axis and the Y2 axis) such as deterioration of device due to torsion or the like of the axis, for example.

In addition, in measurement system 1, since the amount of position correction is calculated based on the difference value (thrust difference) between the first force (first thrust value) and the second force (second thrust value), the accuracy regarding the amount of position correction is further improved, thus making it possible to further suppress the influence that can occur due to the interaxial interference.

In addition, in measurement system 1, as the test operation, the amount of position correction can be measured by continuously moving first main shaft Y1 and second main shaft Y2 from the start position to the end position in synchronization with each other. Thus, for example, the measurement time can be shortened as compared with the case of stopping first main shaft Y1 and second main shaft Y2 each time at a prescribed measurement position to execute processing for measurement.

In addition, in measurement system 1, the test operation is performed for measurement of the amount of position correction in advance separately from the normal operation. Then, the correction information including the amount of position correction calculated by measurement system 1 is stored in storage 5 of at least one of first amplifier B1 and second amplifier B2 (first storage 51 of first amplifier B1 in the above operation example). At least one of first amplifier B1 and second amplifier B2 (first amplifier B1 in the above operation example) performs control to drive the corresponding motor with reference to the correction information stored in storage 5 of the own device during the normal operation. Therefore, during the normal operation, communication between first amplifier B1 and second amplifier B2 (including communication via host controller 6) may be no longer necessary.

### (9) Modification

Modifications of the above-described exemplary embodiment will be listed below. The modifications described below can be applied in appropriate combination.

In addition, functions similar to those of measurement system 1 according to the above-described exemplary embodiment may be embodied by a measurement method, a computer program, a non-transitory recording medium recording the computer program, or the like.

Measurement system 1 of the present disclosure includes a computer system. The computer system mainly includes a processor and a memory as hardware. The processor executes a program recorded in the memory of the computer system, thereby implementing a function as measurement system 1 in the present disclosure. The program may be recorded in advance in the memory of the computer system, may be provided through a telecommunication line, or may be provided by being recorded in a non-transitory recording medium such as a memory card, an optical disk, or a hard disk drive readable by the computer system. The processor of the computer system includes one or multiple electronic circuits including a semiconductor integrated circuit (IC) or a large scale integration (LSI). The integrated circuit such as an IC or an LSI mentioned here is called differently depending on a degree of integration, and includes an integrated circuit called a system LSI, a very large scale integration (VLSI), or an ultra large scale integration (ULSI). Further, a field-programmable gate array (FPGA) programmed after the manufacture of the LSI or a logic device which can be reconfigured with respect to a bonding relationship inside the LSI or with respect to a circuit section inside the LSI can also be employed as the processor. The multiple electronic circuits may be integrated into one chip, or may be provided in a distributed manner on multiple chips. The multiple chips may be aggregated in one device or may be provided in a distributed manner in multiple devices. The computer system mentioned here includes a microcontroller having one or more processors and one or more memories. Therefore, the microcontroller also includes one or multiple electronic circuits including a semiconductor integrated circuit or a large scale integration.

In addition, integration of multiple functions in measurement system 1 into one housing is not essential. For example, the components of measurement system 1 may be distributed in multiple housings.

On the contrary, multiple functions in measurement system 1 may be aggregated in one housing. Further, at least a part of functions of measurement system 1, for example, some functions of measurement system 1 may be achieved by a cloud (cloud computing) or the like.

In the above-described exemplary embodiment, measurement system 1 includes both of first measurement processing part G1 and second measurement processing part G2, but it is not essential to include both of them, and only one of them may be included. However, the main-shaft servo amplifier without the measurement processing part preferably has a function of outputting the first information, the second information, and the third information to an external device.

The transmission and reception of the first information, the second information, and the third information between first amplifier B1 and second amplifier B2 may be performed by being recorded in a non-transitory recording medium such as a memory card. The correction information such as the amount of position correction may also be recorded in a non-transitory recording medium such as a memory card and used.

In the above embodiment, measurement system 1 calculates the amount of position correction as needed during the test operation, but may calculate the amount of position correction after the test operation is over using the first information, the second information, and the third information acquired during the test operation.

In the above-described exemplary embodiment, measurement system 1 acquires the third information (vibration frequency characteristic) in the same test operation as the first information (thrust). However, the third information (vibration frequency characteristic) may be acquired through a test operation different from the above-described test operation.

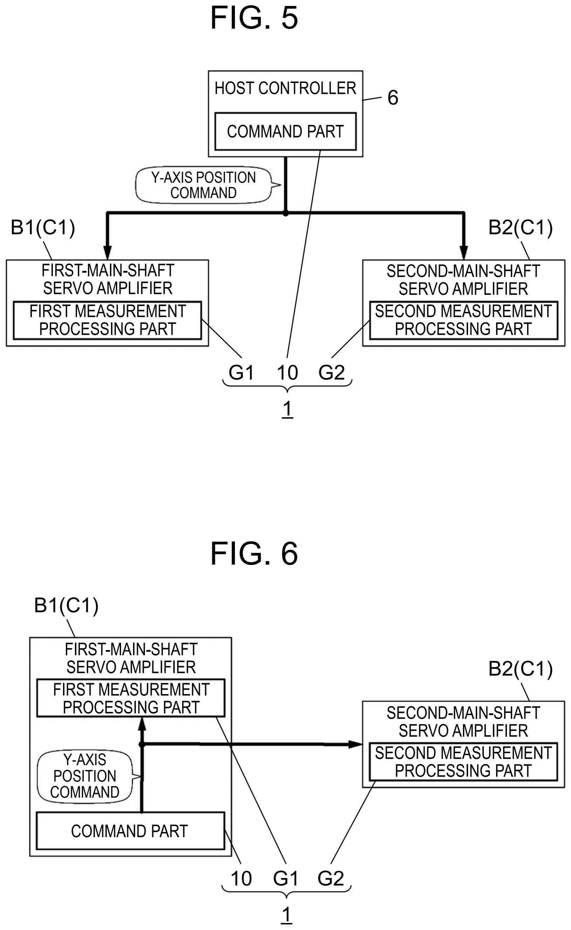

In the above-described exemplary embodiment, the function of command part 10 of measurement system 1 is implemented in processing part 71 of terminal 7. However, for example, as illustrated in Fig. 5, the function of command part 10 may be implemented in host controller 6. Fig. 5 is a schematic block configuration diagram for describing Modification 1 of measurement system 1. When an operator performs an input operation for transmitting a test signal using a user interface attached to host controller 6, command part 10 of host controller 6 transmits the test signal of the synchronized position command to first amplifier B1 and second amplifier B2. The transmission and reception of the first information, the second information, and the third information during the test operation may be performed by direct communication between first amplifier B1 and second amplifier B2, or may be performed by indirect communication via another device (such as host controller 6).

Alternatively, for example, as illustrated in Fig. 6, the function of command part 10 may be implemented in control device C1. Fig. 6 is a schematic block configuration diagram for describing Modification 2 of measurement system 1. In the illustrated example of Fig. 6, the function of command part 10 is implemented only in first amplifier B1, but may be implemented only in second amplifier B2, or may be implemented in both main-shaft servo amplifiers. The operator performs an input operation for transmitting a test signal using a user interface attached to first amplifier B1. As a result, command part 10 of first amplifier B1 transmits the test signal of the synchronized position command to first measurement processing part G1 in first amplifier B1 and second measurement processing part G2 of second amplifier B2. The transmission and reception of the first information, the second information, and the third information during the test operation may be performed by direct communication between first amplifier B1 and second amplifier B2, or may be performed by indirect communication via another device (such as host controller 6).

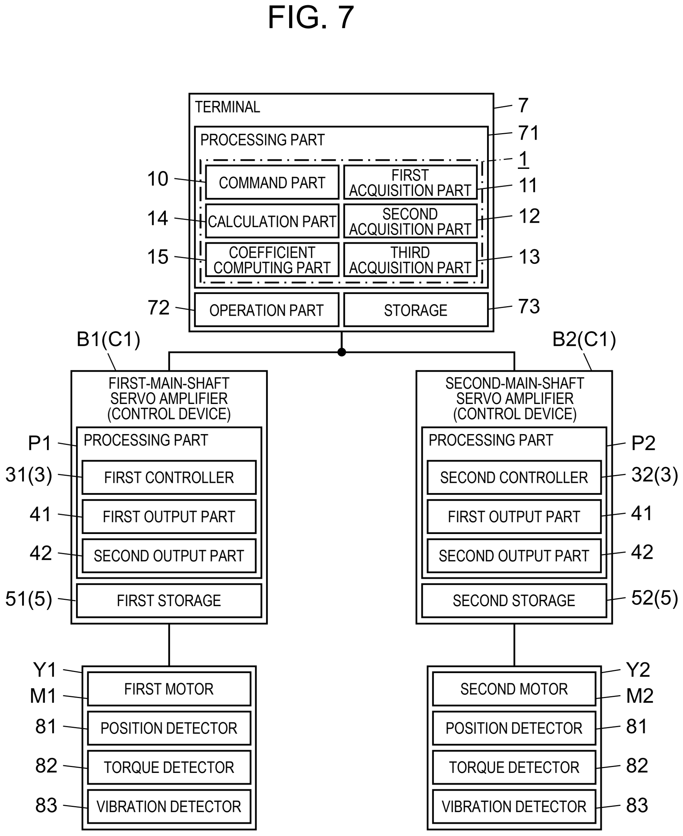

Alternatively, for example, as illustrated in Fig. 7, all the functions of measurement system 1 may be implemented in processing part 71 of terminal 7. Fig. 7 is a schematic block configuration diagram for describing Modification 3 of measurement system 1. In this case, first output part 41 of each of first amplifier B1 and second amplifier B2 outputs the first information (thrust) during the test operation to terminal 7. Second output part 42 of each of first amplifier B1 and second amplifier B2 outputs the second information (the position of the motor) during the test operation to terminal 7. In addition, each of first amplifier B1 and second amplifier B2 outputs the third information (vibration frequency characteristic) during the test operation to terminal 7. Meanwhile, terminal 7 transmits the correction information including the amount of position correction and the like calculated by calculation part 14 to at least one of first amplifier B1 and second amplifier B2 and stores the correction information in storage 5.

### (10) Modification regarding correction coefficient

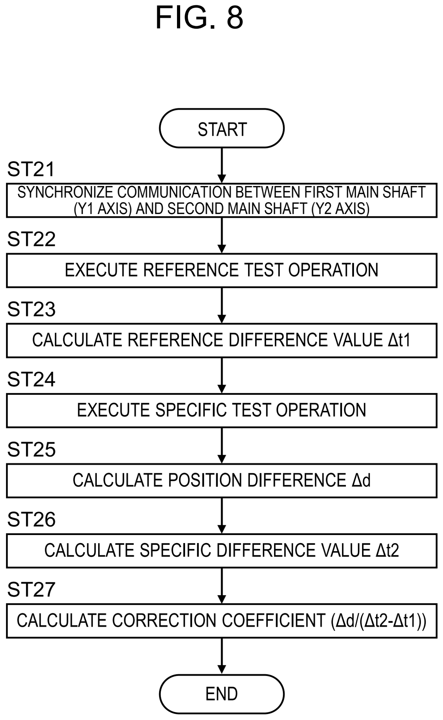

Hereinafter, Modification 4 (present modification) of measurement system 1 will be described with reference to Figs. 8 to 16.

In the above-described exemplary embodiment, calculation part 14 obtains a difference value between the first force (thrust or torque) and the second force (thrust or torque) acquired at the same time, and multiplies the difference value by the correction coefficient to calculate the amount of position correction. In addition, in the above-described exemplary embodiment, coefficient computing part 15 calculates the correction coefficient using resonance frequency f1, antiresonance frequency f2, and function F(f1, f2, M) of load mass M for first drive system A11 and second drive system A12.

Measurement system 1 of the present modification includes coefficient computing part 15 that calculates a correction coefficient, similarly to measurement system 1 of the above-described exemplary embodiment. However, measurement system 1 of the present modification is different from measurement system 1 of the above-described exemplary embodiment in the calculation method. In measurement system 1 of the present modification, command part 10 controls first motor M1 and second motor M2 so as to perform a test operation for calculation of the correction coefficient.

Specifically, the test operation further includes a "specific test operation" in which first main shaft Y1 and second main shaft Y2 move to designated positions in synchronization with each other by giving different position commands so that a shift occurs between first main shaft Y1 and second main shaft Y2 by a predetermined amount of movement. Coefficient computing part 15 calculates a correction coefficient based on fourth information on the first force and the second force during the specific test operation and the predetermined amount of movement.

The "shift by the predetermined amount of movement" mentioned here indicates a shift equal to or less than an allowable amount of movement, and is assumed to be, for example, a shift of about 90% of the allowable amount of movement. The allowable amount of movement is an allowable amount by which first main shaft Y1 and second main shaft Y2 connected in parallel to each other via sub shaft X1 are not assumed to fail or break due to the "shift".

The shift by the predetermined amount of movement is set, for example, in first main shaft Y1. In other words, first main shaft Y1 can be set to be shifted by the predetermined amount of movement toward the positive side (or the negative side) of the Y axis (axial direction D1) with respect to second main shaft Y2 moving to a reference position. The "reference position" mentioned here is, for example, a position to which the amount of position correction described in the above-described exemplary embodiment is not applied.

Alternatively, the shift by the predetermined amount of movement may be set, for example, in second main shaft Y2. In other words, second main shaft Y2 can be set to be shifted by the predetermined amount of movement toward the positive side (or the negative side) of the Y axis with respect to first main shaft Y1 moving to the reference position.

Still alternatively, the shift by the predetermined amount of movement may be set, for example, in both first main shaft Y1 and second main shaft Y2. In other words, first main shaft Y1 can be set to be shifted by a first amount of movement toward the positive side (or the negative side) of the Y axis with respect to the reference position, and second main shaft Y2 can be set to be shifted by a second amount of movement toward the side opposite to the side where first main shaft Y1 is shifted, that is, toward the negative side (or the positive side) of the Y axis with respect to the reference position. In this case, the sum of the first amount of movement and the second amount of movement is the predetermined amount of movement.

The fourth information is acquired by first acquisition part 11. Specifically, first acquisition part 11 acquires, from first output part 41, the fourth information on the first force (for example, thrust) to be applied to first main shaft Y1 and the second force (for example, thrust) to be applied to second main shaft Y2 during the specific test operation.

In the present modification, as an example, the test operation further includes, in addition to the specific test operation, a "reference test operation" in which first main shaft Y1 and second main shaft Y2 move to designated positions in synchronization with each other by giving the same position command as the test operation for calculation of the correction coefficient. Coefficient computing part 15 calculates the correction coefficient based on the fourth information, the predetermined amount of movement, and fifth information on the first force and the second force during the specific test operation. In the reference test operation, the "shift by the predetermined amount of movement" as in the specific test operation is not set, and first main shaft Y1 and second main shaft Y2 move to the reference position.

The fifth information is acquired by first acquisition part 11. Specifically, first acquisition part 11 acquires, from first output part 41, the fifth information on the first force (for example, thrust) to be applied to first main shaft Y1 and the second force (for example, thrust) to be applied to second main shaft Y2 during the reference test operation.

In the present modification, as an example, the fourth information includes information on a specific difference value that is a difference value between the first force and the second force acquired at the same time during the specific test operation. The fifth information includes information on a reference difference value that is a difference value between the first force and the second force acquired at the same time during the reference test operation. Coefficient computing part 15 calculates a correction coefficient based on the amount of change of the specific difference value with respect to the reference difference value and the predetermined amount of movement.

For example, coefficient computing part 15 calculates reference difference value Δt1 (for example, the first thrust value - the second thrust value during the reference test operation) and calculates specific difference value Δt2 (for example, the first thrust value - the second thrust value during the specific test operation). In addition, coefficient computing part 15 calculates position difference Δd between the position of first main shaft Y1 and the position of second main shaft Y2 due to the "shift by the predetermined amount of movement".

Coefficient computing part 15 calculates Δt2-Δt1 as the amount of change of the specific difference value with respect to the reference difference value. Then, coefficient computing part 15 calculates Δd/(Δt2-Δt1) as the correction coefficient. Δd may be a representative value (average value, median value, mode value, etc.) of the position difference calculated for each position. In addition, Δt2-Δt1 may be a representative value (average value, median value, mode value, etc.) of the amount of change calculated for each position.

Note that, it is not essential to execute the reference test operation as the test operation for calculation of the correction coefficient. For example, the specific test operation may be performed twice while the predetermined amount of movement is changed, and the correction coefficient may be calculated based on the amount of change. In addition, the order of executing the reference test operation and the specific test operation is not particularly limited.

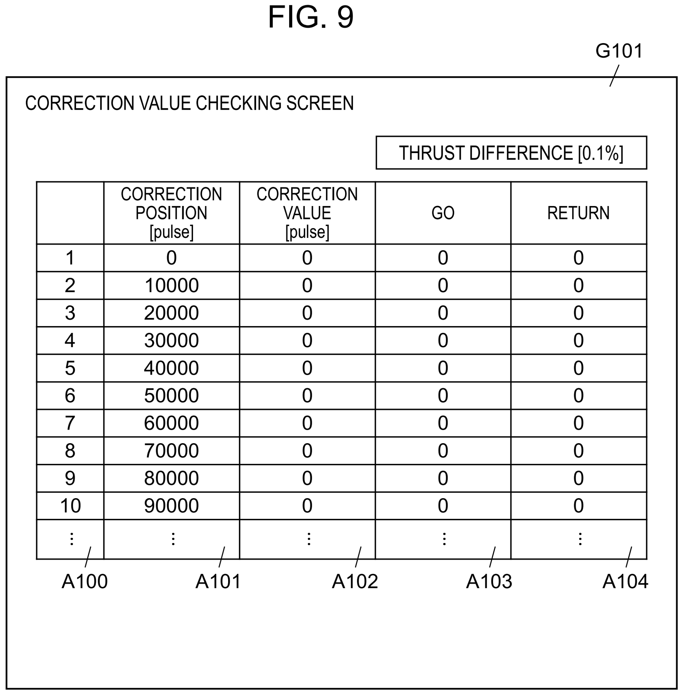

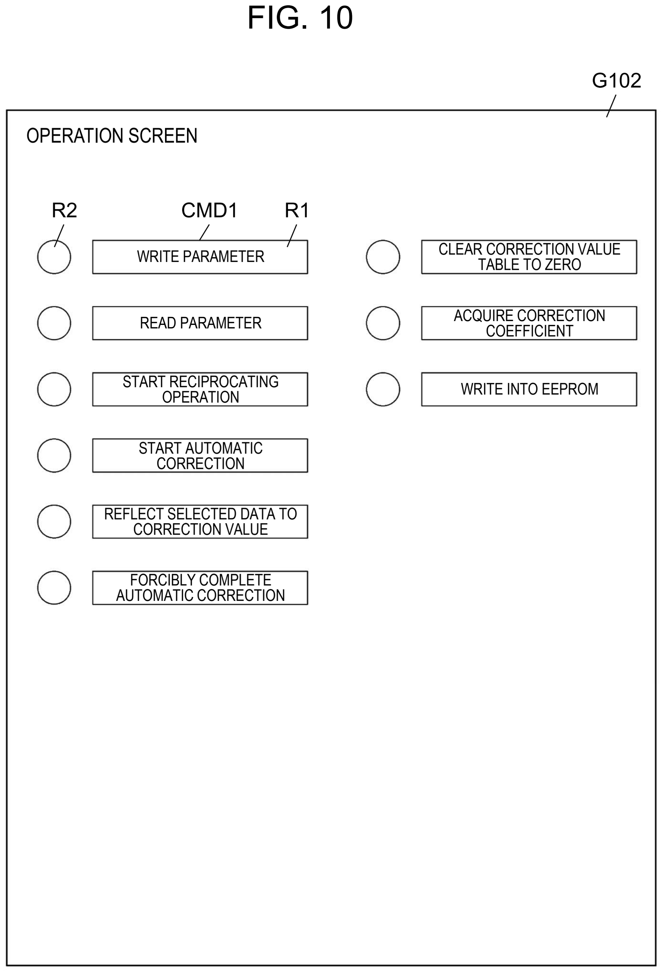

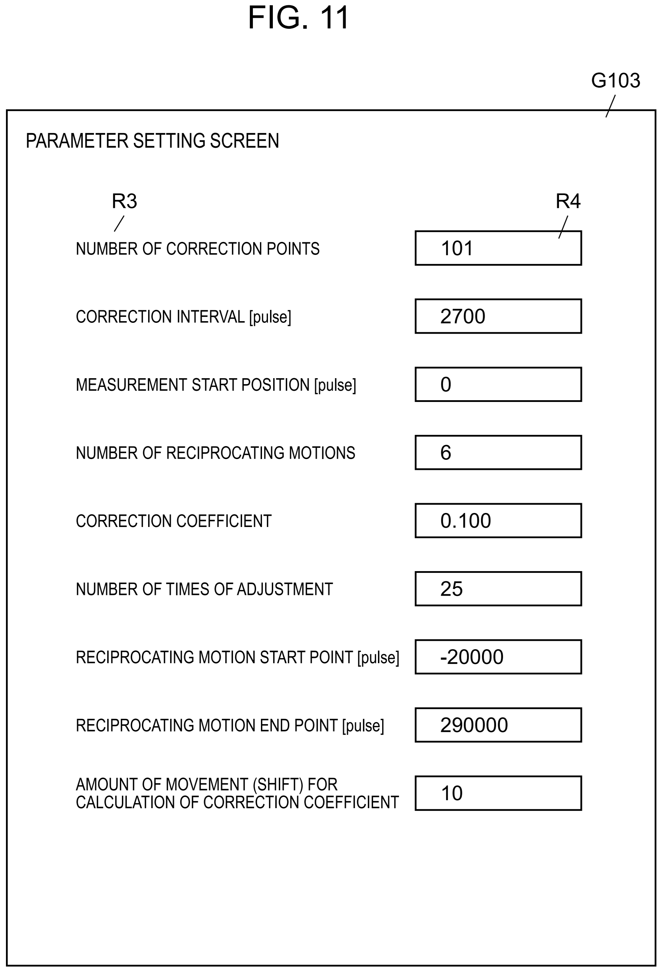

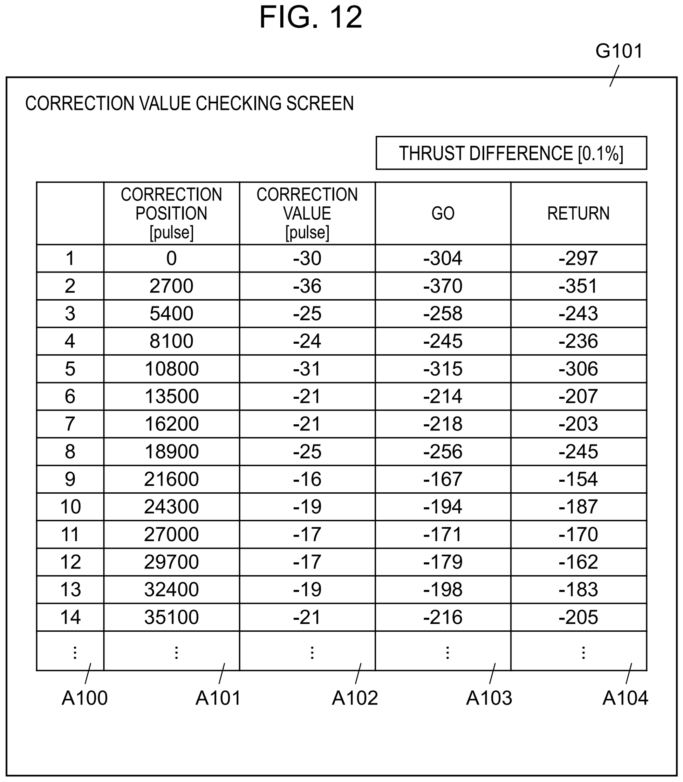

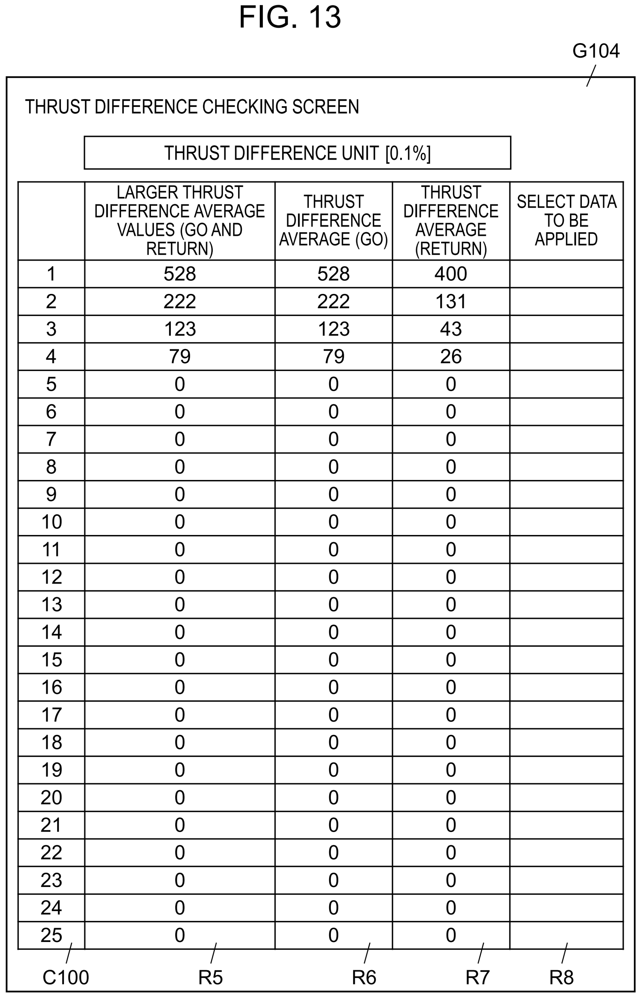

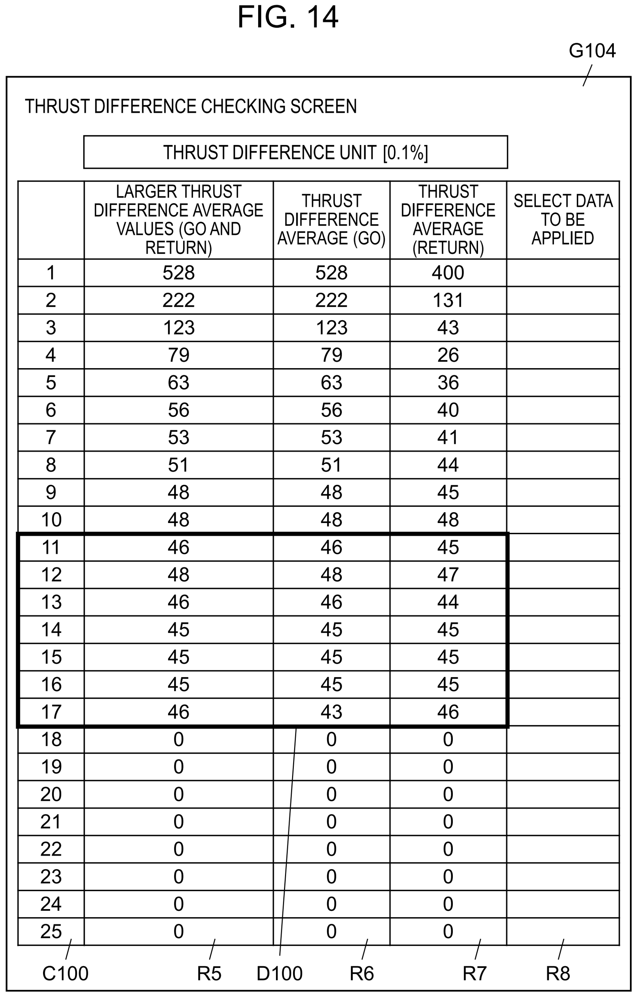

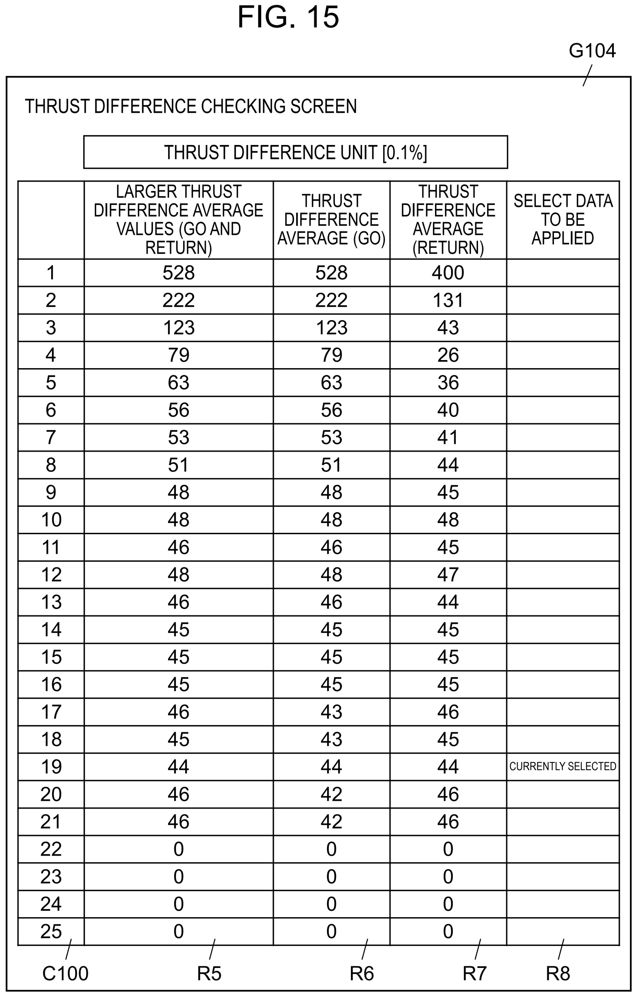

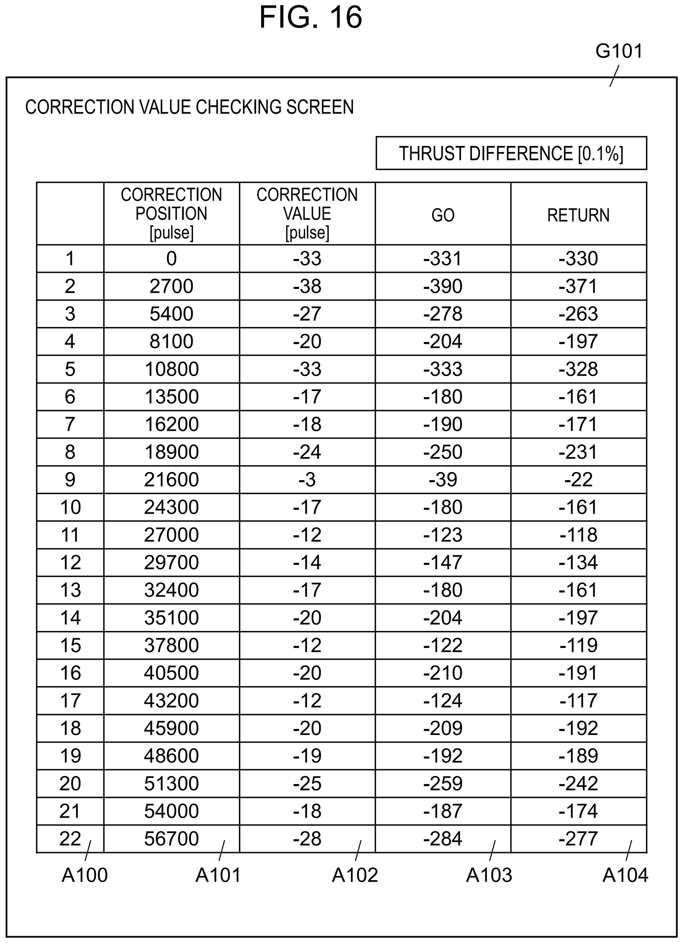

Hereinafter, a series of flow of operation related to acquisition of the correction coefficient and measurement of the amount of correction in measurement system 1 according to the present modification will be described with reference to a flowchart illustrated in Fig. 8 and with reference to Figs. 9 to 16 illustrating conceptual diagrams of a user interface (UI) screen as appropriate. Fig. 8 is a flowchart for describing an operation related to acquisition of the correction coefficient in the measurement system of the present modification. Fig. 9 is a conceptual diagram of a correction value checking screen in the present modification. Fig. 10 is a conceptual diagram of an operation screen in the present modification. Fig. 11 is a conceptual diagram of a parameter setting screen in the present modification. Fig. 12 is a conceptual diagram of a correction value checking screen in the present modification. Fig. 13 is a conceptual diagram of a thrust difference checking screen in the present modification. Fig. 14 is a conceptual diagram of the thrust difference checking screen in the present modification. Fig. 15 is a conceptual diagram of the thrust difference checking screen in the present modification. Fig. 16 is a conceptual diagram of the correction value checking screen in the present modification. The flowchart illustrated in Fig. 8 is merely an example of the operation flow related to acquisition of the correction coefficient in measurement system 1, and the order of kinds of processing may be appropriately changed, or the processing may be appropriately added or omitted.

In the following description, it is assumed that first main shaft Y1 is set to be shifted by the predetermined amount of movement toward the positive side of the Y axis with respect to second main shaft Y2 moving to the reference position during the specific test operation. Note that, which of first main shaft Y1 and second main shaft Y2 is shifted may be appropriately changed by user setting.

The UI screens illustrated in Figs. 9 to 16 may be displayed on display 70 (see Fig. 2) of terminal 7. Numerical values displayed on the UI screens in Figs. 9 to 16 are merely examples, and are not particularly limited. The "thrust difference" displayed on the UI screens in Figs. 9 to 16 may be a "torque difference".

For example, in order to start the test operation, the operator activates dedicated application software using operation part 72 (see Fig. 1) and performs an input operation related to execution of outputting a position command to first amplifier B1 and second amplifier B2.

First, when the operator activates the dedicated application software, processing part 71 of terminal 7 displays operation screen G102 (see Fig. 10) on the screen of display 70.

Operation screen G102 includes operation regions R1 indicating multiple (nine in the illustrated example) instruction contents CMD1 (character string data) and multiple (nine in the illustrated example) state display regions R2 respectively corresponding to the multiple instruction contents CMD1.

Each operation region R1 is a region that functions as an execution button for executing corresponding instruction content CMD1. When any of operation regions R1 is pressed with a pointer of a mouse (operation part 72) or the like, processing of instruction content CMD1 corresponding to this operation region R1 is executed. For example, when measurement system 1 is executing processing of instruction content CMD1 of "start automatic correction", corresponding operation region R1 is in a gray state.

Each state display region R2 is a region for displaying whether processing of corresponding instruction content CMD1 is being executed. For example, when measurement system 1 is executing the processing of instruction content CMD1 of "start automatic correction", corresponding state display region R2 is turned on in green. For example, when measurement system 1 does not execute the processing of instruction content CMD1 of "start automatic correction", corresponding state display region R2 is turned off.

In addition, in response to the activation of the application software, processing part 71 of terminal 7 automatically reads the correction information (such as the amount of position correction) stored in first storage 51 of first amplifier B1. When the correction information is stored in second storage 52 of second amplifier B2, processing part 71 reads the correction information from second storage 52.

When there is instruction content CMD1 whose designation cannot be accepted in the current state, processing part 71 displays this operation region R1 in gray and performs screen control so that this operation region R1 cannot be pressed with a pointer of a mouse (operation part 72) or the like in order to inform that designation of instruction content CMD1 cannot be accepted. For example, while reading data such as the correction information, processing part 71 displays all operation regions R1 in gray to notify the operator that designation of all instruction contents CMD1 cannot be accepted, and performs screen control so that the operator cannot press any operation region R1.

In addition, processing part 71 displays correction value checking screen G101 (see Fig. 9; In Figs. 9 to 16, the amount of position correction is described as a "correction value") including the read amount of position correction and the like on display 70.

Correction value checking screen G101 includes display region A100 indicating the numbers of multiple correction points ("1" to "10" in Fig. 9), display region A101 indicating the "correction position [pulse]" for each correction point, and display region A102 indicating the "correction value [pulse]" for each correction point. In correction value checking screen G101, as an example, the correction position and the correction value (amount of position correction) are illustrated in units of the amount of command pulses to the motor (for example, first motor M1). Note that, the correction position is a position target and corresponds to the above-described "reference position". Although the default numerical value of the correction position is illustrated in Fig. 9, the number of correction points and the correction position can be set and changed on parameter setting screen G103 (see Fig. 11) to be described later.

In addition, correction value checking screen G101 includes display region A103 indicating a thrust difference [0.1%] at "go (going during a reciprocating operation)" and display region A104 indicating a thrust difference [0.1%] at "return (returning during the reciprocating operation)" for the multiple correction points. Note that, the amount of position correction (thrust difference × correction coefficient) is calculated with a value obtained by averaging the thrust difference at "go" and the thrust difference at "return" for each correction position set as "thrust difference".

In the present modification, it is assumed that one test operation is a reciprocating operation in which the main shaft synchronously moves from the start position (first origin position) of the Y axis to the position on the positive side of the Y axis and returns to the end position (second origin position; may be the same as or different from the first origin position). Note that, the start position at which the measurement starts and the end position at which the measurement ends are not necessarily the same as the first origin position and the second origin position, and can be located closer to the positive side than the first origin position and the second origin position, for example.

Fig. 9 illustrates, as an example, a state in which all of "correction value", "go", and "return" are cleared to zero.

If the correction amount measurement processing has never been executed at the time of the first activation of the application software, all the correction values (amounts of position correction) on correction value checking screen G101 can be 0.

If the correction amount measurement processing has already been executed once, a numerical value other than zero can be displayed as the correction value (amount of position correction) on correction value checking screen G101. When the operator intends to clear the correction value to zero, the operator presses operation region R1 corresponding to instruction content CMD1 of "clear correction value table to zero" displayed on operation screen G102. As a result, processing part 71 executes processing of clearing all the correction values (amounts of position correction) to zero.

In addition, processing part 71 displays parameter setting screen G103 (see Fig. 11) for setting numerical values of various parameters related to the test operation on display 70.

Parameter setting screen G103 includes display region R3 indicating names (character string data) of various parameters and input region R4 for accepting numerical value input of the parameters. Hereinafter, the various parameters displayed on parameter setting screen G103 will be described.

The parameter "number of correction points" is the number of correction points for measuring the correction value (amount of position correction). In the example of Fig. 11, "101" is input, and in this case, the correction positions, the correction values, and the like for the respective correction points "1" to "101" can be checked on correction value checking screen G101 (only the correction points "1" to "10" are illustrated in Fig. 9).

The parameter "correction interval [pulse]" is an interval between correction points, and is indicated in units of the amount of command pulses to the motor (for example, first motor M1). By multiplying the correction interval by the number of correction points, a distance as the correction target is obtained. In the example of Fig. 11, "2700" is input, and in correction value checking screen G101 illustrated in Fig. 12 in which this numerical value is reflected, the correction positions of the correction points "2", "3", "4" ... are 2700, 5400, 8100 ....

The parameter "measurement start position [pulse]" is the position of the first correction point, and is indicated in units of the amount of command pulses to the motor (for example, first motor M1). In the example of Fig. 11, "0" is input, and the correction position of the correction point "1" is 0 on correction value checking screen G101 illustrated in Fig. 12 reflecting this numerical value.

The parameter "number of reciprocating motions" is the number of reciprocating operations performed when the thrust difference data is acquired, and the thrust difference data is acquired by the number of times, and a representative value (for example, an average value) thereof is adopted as the true thrust difference.

The parameter "correction coefficient" is a parameter by which the thrust difference is multiplied in order to obtain the correction value (amount of position correction). In the example of Fig. 11, "0.100" is set in advance as the initial value. The correction coefficient can be updated by performing the specific test operation and the reference test operation described above and executing correction coefficient calculation processing. That is, the "correction coefficient" is a parameter that is automatically updated and does not need to be directly input by the operator (user).

The parameter "number of times of adjustment" is the number of times the correction value is adjusted. The above-described exemplary embodiment has described that measurement system 1 executes the correction amount optimization processing of repeatedly performing the test operation for correction amount measurement and the correction amount measurement processing until the specific condition is satisfied. In the present modification, measurement system 1 executes correction amount optimization processing of repeatedly performing the test operation for correction amount measurement and the correction amount measurement processing by the number of times designated by the "number of times of adjustment".

The parameter "reciprocating operation start point [pulse]" is the first origin position of the test operation, that is, the position serving as the start point of the reciprocating operation performed when the thrust difference data is acquired, and is indicated in units of the amount of command pulses to the motor (for example, first motor M1). The parameter "reciprocating operation start point [pulse]" is preferably set to a value smaller than the start position at which the measurement starts.

The parameter "reciprocating operation end point [pulse]" is the second origin position of the test operation, that is, the position serving as the end point of the reciprocating operation performed when the thrust difference data is acquired, and is indicated in units of the amount of command pulses to the motor (for example, first motor M1). The parameter "reciprocating operation end point [pulse]" is preferably set to a value larger than the position of the last correction point.

The parameter "amount of movement (shift) for calculation of correction coefficient" is the "predetermined amount of movement" used in the specific test operation described above. In the present modification, as an example, "10" (in units of [pulse]) is set in advance. The parameter "amount of movement (shift) for calculation of correction coefficient" is preferably set to be equal to or less than the above-described allowable amount of movement.

When the operator finishes the work of setting various parameters described above on parameter setting screen G103, the operator presses operation region R1 corresponding to instruction content CMD1 of "write parameter" on operation screen G102 (see Fig. 10). As a result, the various parameters thus set are saved in, for example, storage 73 (or may be first storage 51 of first amplifier B1, second storage 52 of second amplifier B2, or the like) of terminal 7.

Meanwhile, when the operator presses operation region R1 corresponding to instruction content CMD1 of "read parameter" on operation screen G102, various parameters previously stored in storage 73 (or first storage 51, second storage 52, or the like) are displayed on parameter setting screen G103.

### [Acquisition of correction coefficient]

The operator acquires the correction coefficient before performing the correction amount measurement processing. The operator presses operation region R1 corresponding to instruction content CMD1 of "acquire correction coefficient" on operation screen G102 (see Fig. 10). As a result, measurement system 1 starts a series of operations related to acquisition of the correction coefficient (see the flowchart in Fig. 8).

First, measurement system 1 synchronizes communication between first main shaft Y1 and second main shaft Y2 (step ST21).

Measurement system 1 executes a "reference test operation" in which first main shaft Y1 and second main shaft Y2 move to designated positions in synchronization with each other by providing the same position command (step ST22). In the reference test operation, at least a part of the parameters (such as the number of correction points and the correction interval) set on parameter setting screen G103 can also be applied.

Measurement system 1 calculates a difference between the first thrust value of first main shaft Y1 and the second thrust value of second main shaft Y2 at each correction point acquired during the reference test operation, that is, reference difference value Δt1 (step ST23).

Subsequently, measurement system 1 executes a "specific test operation" in which first main shaft Y1 and second main shaft Y2 move to designated positions in synchronization with each other by giving different position commands so that a shift occurs between first main shaft Y1 and second main shaft Y2 by a predetermined amount of movement (10 [pulse] in the example of Fig. 11) (step ST24). One of first main shaft Y1 and second main shaft Y2 (here, first main shaft Y1) moves so as to be shifted by the predetermined amount of movement at all of the correction points. In the specific test operation, at least a part of the parameters (such as the amount of movement (shift), the number of correction points, or the correction interval) set on parameter setting screen G103 can also be applied.

For each correction point, measurement system 1 calculates position difference Δd between the position of first main shaft Y1 and the position of second main shaft Y2 due to the shift by the amount of movement (step ST25). In addition, measurement system 1 obtains an average value (may be a representative value other than the average value) of the position differences at all the correction points, and sets the average value as final position difference Δd.

Further, measurement system 1 calculates a difference between the first thrust value of first main shaft Y1 and the second thrust value of second main shaft Y2 at each correction point acquired during the specific test operation, that is, specific difference value Δt2 (step ST26).

Finally, measurement system 1 obtains an average value (may be a representative value other than the average value) of (Δt2-Δt1) at all the correction points, sets the average value as final (Δt2-Δt1), and calculates Δd/(Δt2-Δt1) as a correction coefficient (step ST27). This completes a series of operations related to acquisition of the correction coefficient. Note that, measurement system 1 may obtain an average value of Δt1 at all the correction points, obtain an average value of Δt2 at all the correction points, set the difference between the average values as final (Δt2-Δt1), and calculate Δd/(Δt2-Δt1) as the correction coefficient.

The correction coefficient thus obtained is automatically updated as the parameter "correction coefficient". The initial value correction coefficient "0.100" (see Fig. 11) is automatically updated to the acquired new correction coefficient (for example, "0.080"). The operator can check the updated parameter "correction coefficient" on parameter setting screen G103 (see Fig. 11).

### [Execution of automatic correction operation]

Next, the operator presses operation region R1 corresponding to instruction content CMD1 of "start automatic correction" on operation screen G102 (see Fig. 10). As a result, measurement system 1 starts a series of operations including the automatic correction operation, that is, the correction amount measurement processing (for the operation flow of the correction amount measurement processing, refer to the flowchart illustrated in Fig. 3). Note that, as described above, the test operation for measuring the amount of correction and the correction amount measurement processing are repeatedly executed by the number of times of adjustment (the number of times of the correction amount optimization processing) set on parameter setting screen G103. Meanwhile, when operation region R1 corresponding to instruction content CMD1 of "start reciprocating operation" on operation screen G102 (see Fig. 10) is pressed, measurement system 1 executes the reciprocating operation but does not execute processing such as calculation of the correction value (amount of position correction). Operation region R1 of "start reciprocating operation" can be used, for example, to check the state of the current thrust difference.

During execution of the automatic correction operation, as illustrated in correction value checking screen G101 in Fig. 12 and thrust difference checking screen G104 in Fig. 13, a state in which the correction value (amount of position correction) at each correction point, an average value of thrust differences at each correction point, and the like are calculated in real time is displayed.

Thrust difference checking screen G104 will be described here. Processing part 71 displays thrust difference checking screen G104 (see Figs. 13 to 15) for checking the thrust difference (which may be a torque difference) as a measurement result on display 70.

Thrust difference checking screen G104 shows display region C100 indicating the number of times of adjustment (for example, "1" is the first adjustment, that is, the first correction amount optimization processing). In addition, thrust difference checking screen G104 includes, for each adjustment, display region R6 indicating the "thrust difference average (go)" (for example, displayed as an absolute value), display region R7 indicating the "thrust difference average (return)" (for example, displayed as an absolute value), and display region R5 indicating the "larger thrust difference average values (go and return)" (for example, displayed as an absolute value). Thrust difference checking screen G104 also includes input region R8 that accepts a selection input of "selection of data to be applied" for each adjustment.

The "thrust difference average (go)" is an average value of the thrust differences between the first thrust value and the second thrust value for all the correction points in going of the reciprocating operation in each adjustment. Meanwhile, the "thrust difference average (return)" is an average value of the thrust differences between the first thrust value and the second thrust value for all the correction points in returning of the reciprocating operation in each adjustment. The "larger average value between the thrust differences (go and return)" is the larger value between the "thrust difference average (go)" and the "thrust difference average (return)" in each adjustment. In the example of Fig. 13, at the first adjustment (that is, "1"), the "thrust difference average (go)" = 528 is larger between the "thrust difference average (go)" = 528 and the "thrust difference average (return)" = 400, and thus "528" is displayed in the "larger average value between the thrust differences (go and return)".

Conditions for completing the automatic correction operation include, for example, the following "first condition" and "second condition", and measurement system 1 completes the automatic correction operation when any one of these conditions is satisfied.

The "first condition" is that the measurement (the test operation for measuring the amount of correction and the correction amount measurement processing) for the number of times of adjustment set on parameter setting screen G103 ends.

The "second condition" is that operation region R1 corresponding to instruction content CMD1 of "forcibly complete automatic correction" on operation screen G102 (see Fig. 10) is pressed. When "forcibly complete automatic correction" is instructed during the execution of the automatic correction operation, measurement system 1 forcibly completes the automatic correction operation at the time point when acquisition of the thrust difference currently being measured is completed even if measurement for the number of times of adjustment is not completed.

For example, when the operator checks thrust difference checking screen G104 and determines that the thrust difference has converged to some extent and no effect can be obtained by further adjustment (optimization processing), the operator can select "forcibly complete automatic correction" on operation screen G102 in order to shorten the time. For example, in thrust difference checking screen G104 illustrated in Fig. 14, the thrust differences at the eleventh to seventeenth adjustment illustrated in frame D100 have converged to some extent around "45", and the thrust difference is expected not to become smaller any more by further adjustment. The operator may select "forcibly complete automatic correction" at the time point when the seventeenth adjustment (optimization) is completed.

After the first condition or the second condition is satisfied and the automatic correction operation is completed, the operator checks the adjusted thrust differences on thrust difference checking screen G104 and selects which adjusted thrust difference is to be applied, in other words, which adjusted correction value (amount of position correction) is to be applied. For example, in the example of Fig. 15, the operator selects the nineteenth adjustment indicating the smallest number "44" among the "larger average value between the thrust differences (go and return)" for 21 times of adjustment (optimization processing). In other words, when the operator presses input region R8 corresponding to the nineteenth adjustment with a pointer of a mouse or the like, "currently selected" is displayed in corresponding input region R8 as illustrated in Fig. 15.

With the nineteenth adjustment selected, the operator presses operation region R1 corresponding to instruction content CMD1 of "reflect selected data to correction value" on operation screen G102 (see Fig. 10). As a result, measurement system 1 calculates the correction value (amount of position correction) for each correction point = thrust difference (as described above, the average of the thrust difference of "go" and the thrust difference of "return" at this correction position) × correction coefficient at the nineteenth adjustment using the reflected correction coefficient calculated as described above, and reflects the result. For example, as illustrated in correction value checking screen G101 of Fig. 16, the thrust difference of "go", the thrust difference of "return", and the reflected correction value (amount of position correction) regarding each correction point at the nineteenth adjustment are displayed. The reflected correction value (amount of position correction) is also transmitted to first amplifier B1 (when the correction value is stored in second amplifier B2, the correction value is transmitted to second amplifier B2).

The operator can perform the work of selecting another time of adjustment on thrust difference checking screen G104 and executing "reflect selected data correction value" on operation screen G102 as many times as necessary until the operator presses and executes "start automatic correction" on operation screen G102 again.

When the operator checks the reflected correction value and the like on correction value checking screen G101 and determines to set with the contents, the operator presses operation region R1 corresponding to instruction content CMD1 of "write into EEPROM" on operation screen G102. As a result, data of the reflected correction value (amount of position correction) is stored in first storage 51 (Electrically Erasable and Programmable Read Only Memory (EEPROM)) of first amplifier B1.

As described above, in the present modification, measurement system 1 calculates the correction coefficient based on the measurement result by the specific test operation, and calculates the correction value (amount of position correction) using this correction coefficient, so that the influence that can occur due to the interaxial interference can be further suppressed.

Meanwhile, in the example of Fig. 11, in order to simplify the table design of the correction value (amount of position correction), it is assumed that the values of three parameters including: the correction interval [pulse]; the start point [pulse] of the reciprocating operation; and the end point [pulse] of the reciprocating operation are input and designated by the operator (user). Upon the operator inputting the values of these parameters, measurement system 1 automatically calculates and sets the number of correction points (in other words, the number of divisions). By designating the correction interval in this manner, the design based on the number of pulses corresponding to the physical distance is guaranteed.

However, the present disclosure is not limited thereto, and instead of the correction interval, the number of correction points (number of divisions) may be designated by the operator. That is, in order to simplify the table design of the amount of position correction, three parameters including: the number of correction points (the number of divisions); the start point of the reciprocating operation; and the end point of the reciprocating operation may be input by the operator, and measurement system 1 may automatically calculate and set the correction interval.

In other words, measurement system 1 includes a processing part (here, processing part 71 of terminal 7 as an example). Processing part 71 acquires, as parameters to be applied to the test operation (for example, the reciprocating operation), the start point of the test operation, the end point of the test operation, and the number of correction points (the number of divisions) that are the number of points at which the amount of position correction is calculated between the start point and the end point. Processing part 71 calculates the correction interval from the number of correction points, the start point, and the end point.

When the user designates the number of correction points (the number of divisions) in this manner, the design based on the amount of memory is guaranteed as to how much amount of memory (such as storage 5) required to store data on the amount of position correction increases.

### (11) Modifications related to various support functions

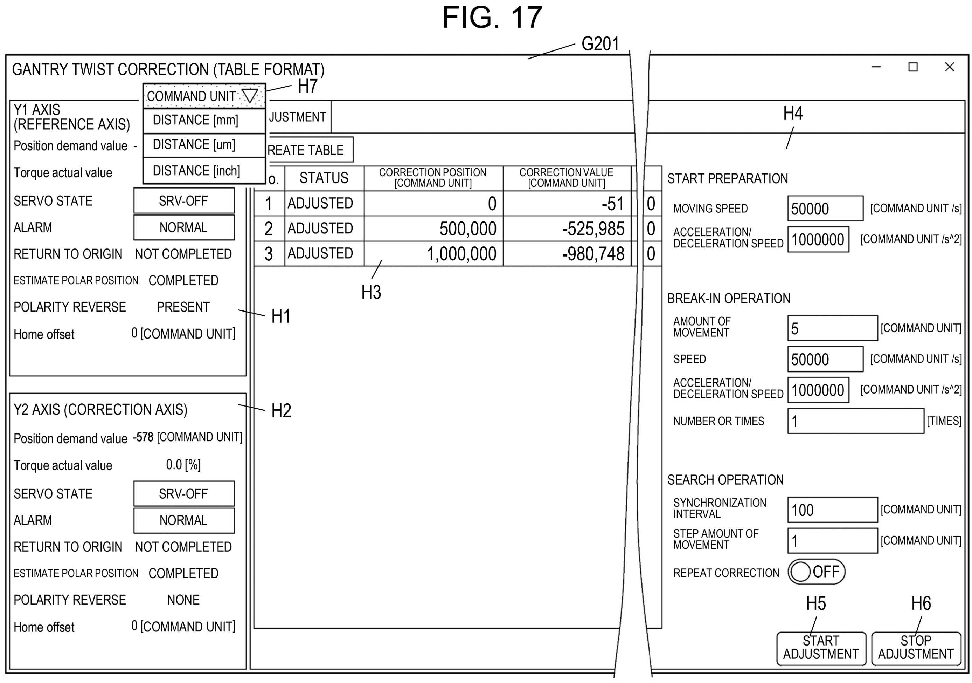

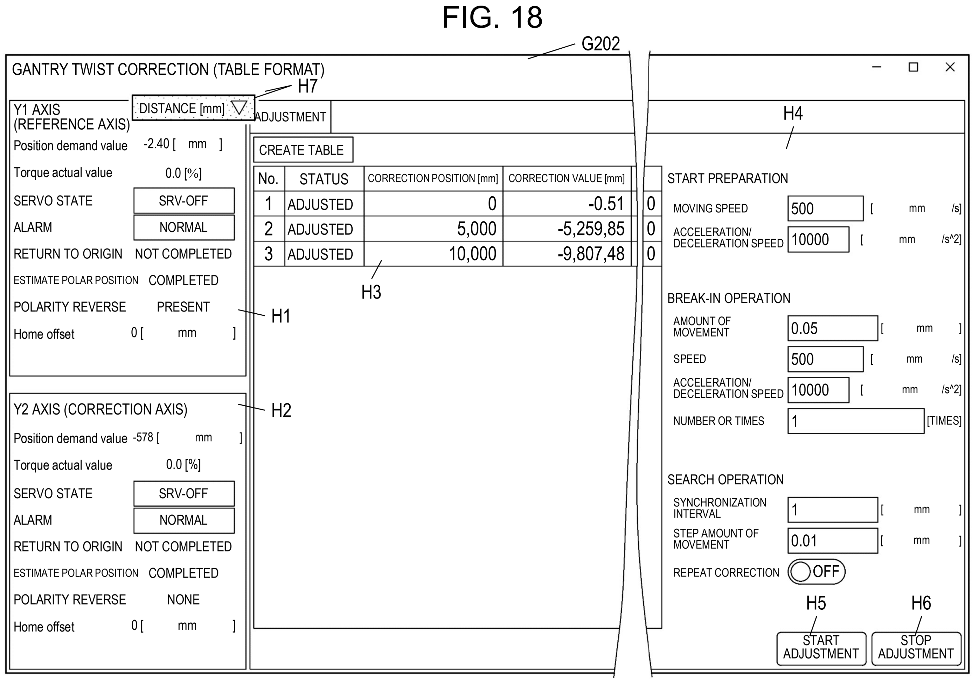

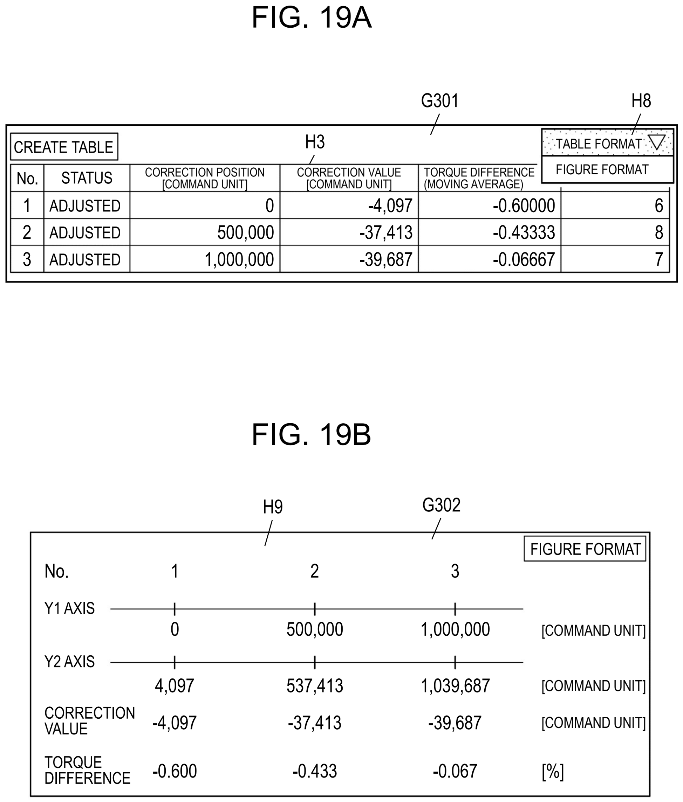

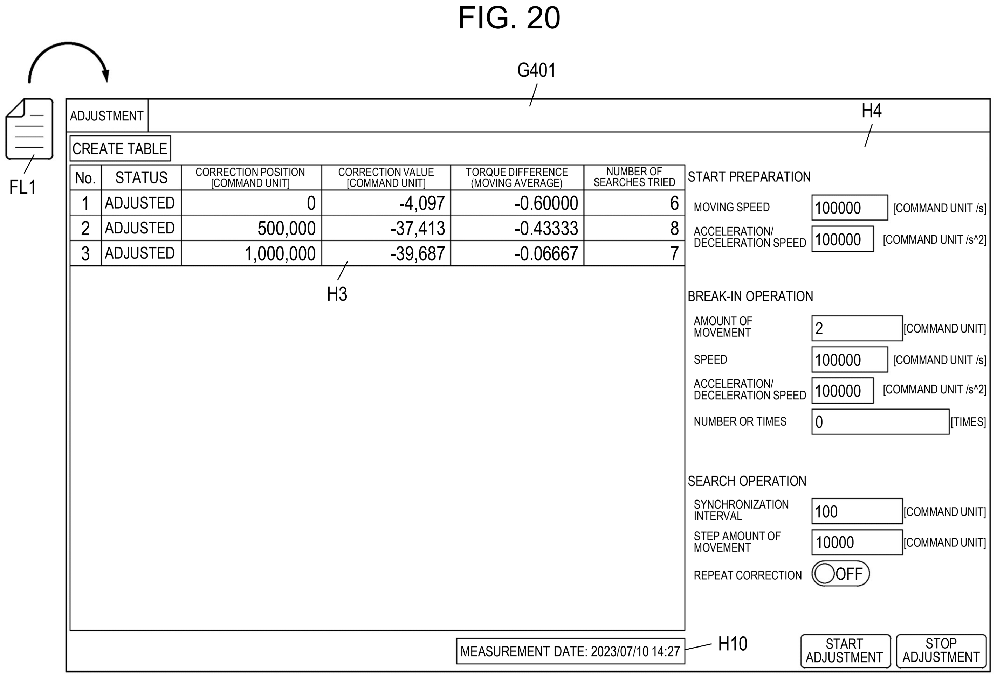

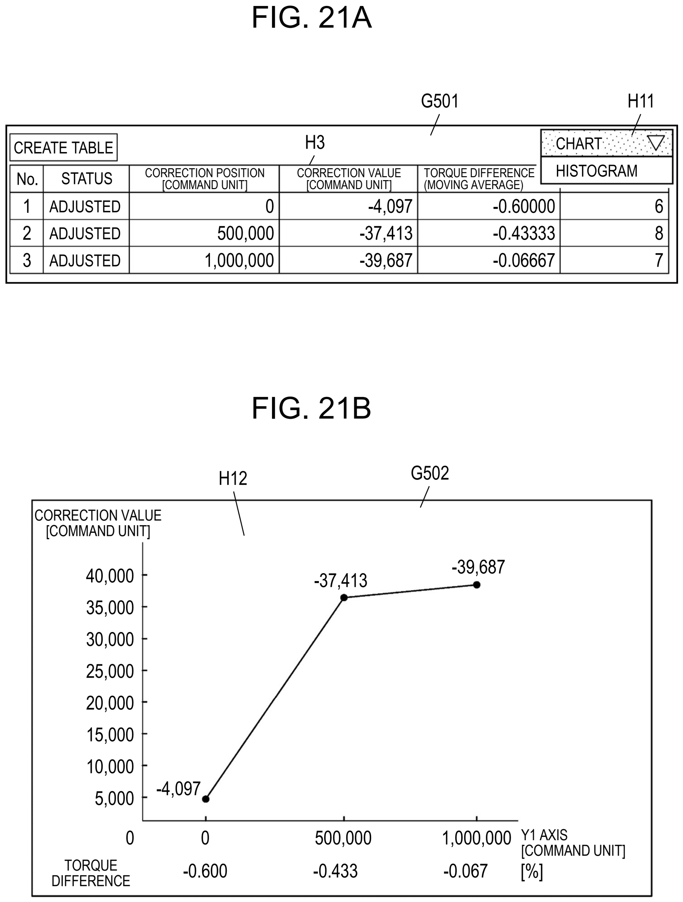

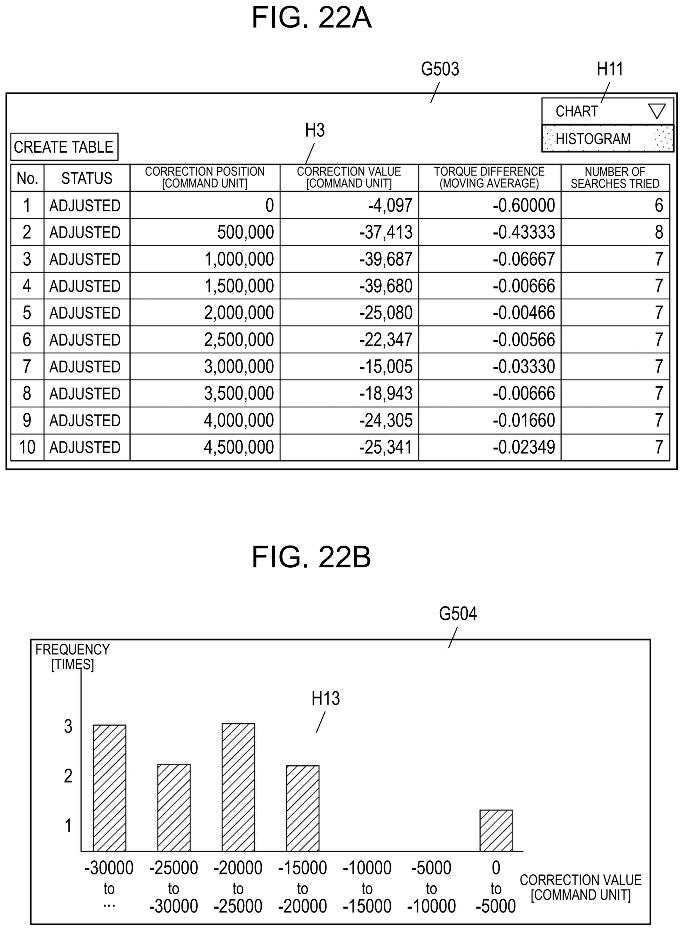

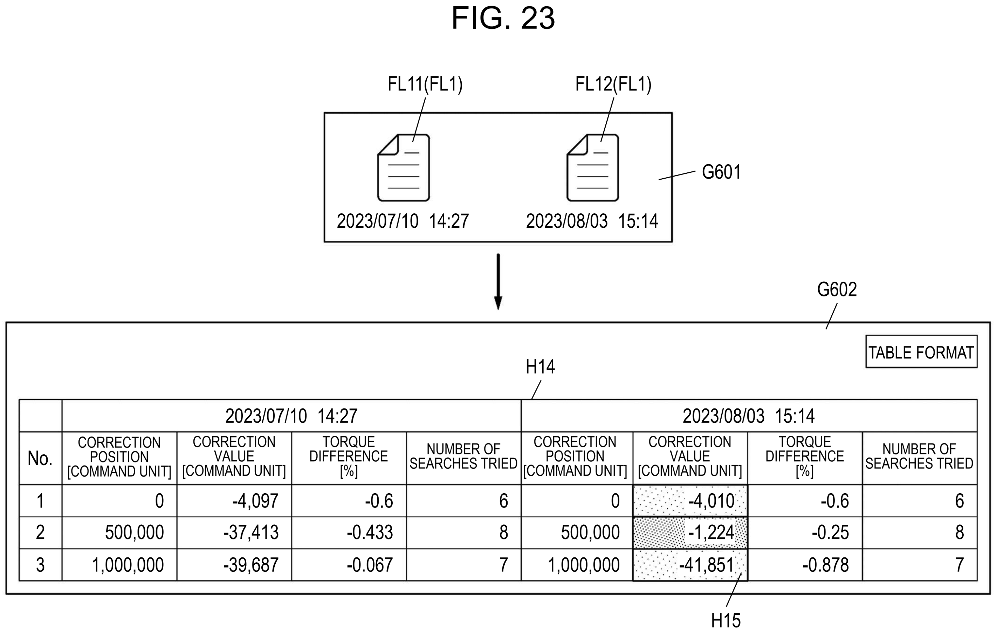

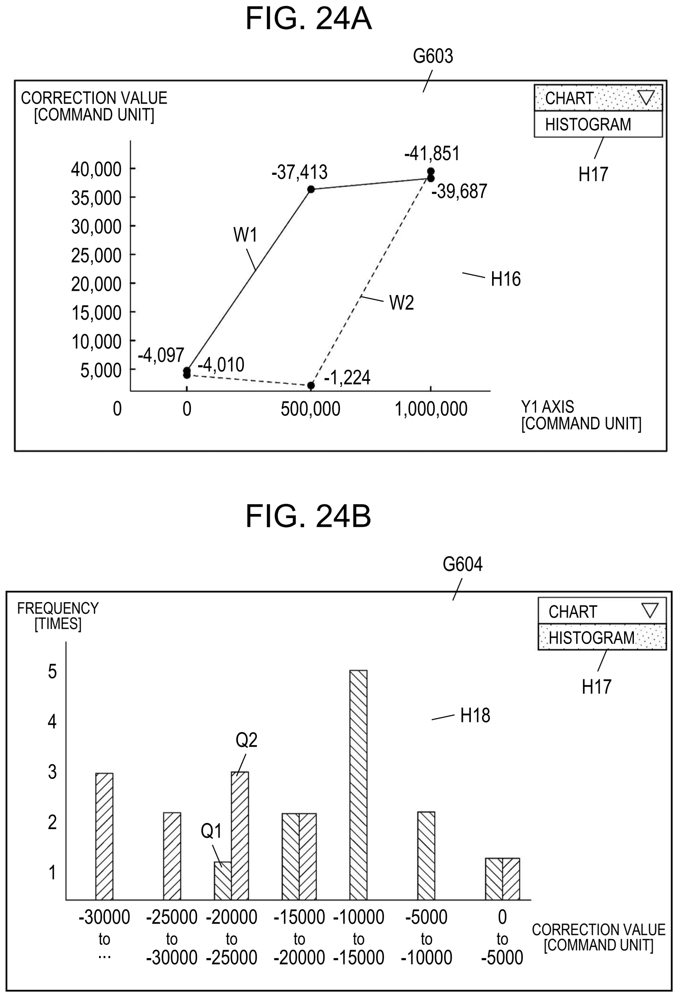

Hereinafter, measurement system 1 according to Modification 5 (present modification) will be described with reference to Figs. 17 to 24B. Fig. 17 is a conceptual diagram of a screen for describing a first function (unit conversion function) in the measurement system according to the present modification. Fig. 18 is a conceptual diagram of the screen for describing the first function of the present modification. Fig. 19A is a conceptual diagram of a screen for describing a second function (conversion function into a figure format) of the present modification. Fig. 19B is a conceptual diagram of the screen for describing the second function (conversion function into a figure format) of the present modification. Fig. 20 is a conceptual diagram of a screen for describing a third function (function of associating date information) of the present modification. Fig. 21A is a conceptual diagram of a screen for describing a fourth function (conversion function into a chart format) of the present modification. Fig. 21B is a conceptual diagram of the screen for describing the fourth function (conversion function into a chart format) of the present modification. Fig. 22A is a conceptual diagram of a screen for describing a fifth function (conversion function into a histogram format) of the present modification. Fig. 22B is a conceptual diagram of the screen for describing the fifth function (conversion function into a histogram format) of the present modification. Fig. 23 is a conceptual diagram of a screen for describing a sixth function (past data comparison display function) of the present modification. Fig. 24A is a conceptual diagram of a screen for describing a seventh function (past data comparison display function in another display format) of the present modification. Fig. 24B is a conceptual diagram of the screen for describing the seventh function (past data comparison display function in another display format) of the present modification. Measurement system 1 according to Modification 5 has various support functions (the first to seventh functions) for supporting the operator (user). Various user screens (window screens) illustrated in Figs. 17 to 24B may be displayed on display 70 (see Fig. 2) of terminal 7. Numerical values displayed on the user screens in Figs. 17 to 24B are merely examples, and are not particularly limited. In addition, the "torque difference" (between the Y1 axis and the Y2 axis) displayed on the user screen in some of Figs. 17 to 24B may be the "thrust difference".

The support functions in Modification 5 are functions of supporting the user mainly when the user checks the information on the measurement of the amount of position correction on the user screen. The "information on the measurement of the amount of position correction" may include data (including past data) on setting conditions related to the test operation, states of the Y1 axis and the Y2 axis during the test operation, measurement results of the amount of position correction, and the like.

### [First function]

Measurement system 1 according to Modification 5 has the first function (unit conversion function) as one of the support functions. Hereinafter, the first function will be described with reference to Figs. 17 and 18.

Measurement system 1 can display user screen G201 illustrated in Fig. 17 on display 70 of terminal 7. For example, user screen G201 is displayed when the user activates dedicated application software on terminal 7 using operation part 72 (see Fig. 1) and performs an input operation for starting the test operation. User screen G201 may be a screen displayed by executing an operation for opening past data file FL1 to be described later.

As an example, user screen G201 includes first region H1 for displaying setting conditions and states regarding first main shaft Y1 (that is, the Y1 axis) and second region H2 for displaying setting conditions and states regarding second main shaft Y2 (that is, the Y2 axis). User screen G201 illustrates an example of a case where the amount of position correction of the Y2 axis is calculated with the position of the Y1 axis as a reference, and as a result, the Y1 axis is indicated as a "reference axis" and the Y2 axis is indicated as a "correction axis".

In addition, user screen G201 includes table display region H3 indicating measurement results regarding the correction position, the correction value (amount of position correction), and the like in a table format. Table display region H3 can also be said to be a modification of the display example of correction value checking screen G101 including the correction position, the correction value, and the like illustrated in Fig. 9. In the example of Fig. 17, for convenience, the correction positions, the correction values, and the like corresponding to the numbers ("No. 1" to "No. 3") of three correction points are illustrated, but the number of correction points is not particularly limited, and may be, for example, 10 or more.

In addition, user screen G201 includes setting region H4 to which setting conditions (numerical values of parameters and the like) such as a moving speed and acceleration/deceleration in the test operation can be input. These setting conditions can be set (input) by the user as preparation before the test operation.

The [command unit] displayed on user screen G201 is, for example, [pulse] which is a unit of the amount of command pulses to the motor (M1, M2), similarly to correction value checking screen G101 of Fig. 9.

The user checks first region H1 and second region H2 on user screen G201, completes an input of the setting conditions in setting region H4, and once the preparation for the test operation is ready, operates the mouse (operation part 72) to press operation region H5 indicating "start adjustment" located at the lower right with a pointer or the like on the screen. Then, the test operation (measurement of the amount of position correction) starts. When stopping the test operation (measurement of the amount of position correction), the user can stop the test operation by pressing operation region H6 indicating "stop adjustment" with the pointer or the like.

In short, first region H1, second region H2, table display region H3, setting region H4, and the like are displayed on one screen (user screen G201) at the same time, thereby achieving user convenience.

Here, user screen G201 further includes selection region H7 for the user to select (designate) a unit displayed. When the user presses the down arrow mark of selection region H7 with a pointer or the like on the screen, a list of multiple selectable units displayed is displayed as a list (so-called pull-down function). In the example of Fig. 17, the list includes four units of [command unit (pulse)] and distance units [mm], [µm], and [inch], and [command unit (pulse)] displayed is selected as the initial setting.

When the user selects one unit displayed other than [command unit] from the list, the numerical value displayed in [command unit] on user screen G201 is converted into the numerical value of the selected display unit and displayed.

In other words, measurement system 1 includes a processing part (here, processing part 71 of terminal 7 as an example). Processing part 71 causes display 70 to display data including at least the amount of position correction (correction value). Processing part 71 converts the unit displayed such that the numerical value of data displayed in a specific unit on the screen of display 70 is displayed in another unit selected according to the (user's) selection operation.

Fig. 18 illustrates user screen G202 in which [command unit] is converted into the distance [mm] by the user selecting the distance [mm] as the unit displayed in selection region H7. That is, by selecting the unit [mm] displayed, the corresponding numerical values are converted and displayed on user screen G202. User screen G202 is the same as user screen G201 in Fig. 17 except for the unit [mm] displayed and the numerical values thereof. When the user selects [command unit (pulse)] again in selection region H7, the screen returns to user screen G201 in Fig. 17.

It is sometimes difficult for the user to intuitively understand the numerical values displayed in the command unit (pulse). In the first function, the user can select any one of the actual distances [mm], [µm], and [inch] in selection region H7, and as a result, the user can check the setting conditions, the measurement result, and the like with numerical values that are intuitively easy to understand.

Note that, when the user selects the display unit in selection region H7 of user screen G201, the numerical values in the unit selected on user screen G201 may be automatically displayed also on the user screens related to the second to seventh functions to be described later. Specifically, for example, when the distance [mm] is selected on user screen G201, numerical values may be automatically displayed in units of the distance [mm] also on user screens G301 and G302 illustrated in Figs. 19A and 19B, respectively. In addition, selection region H7 may also be displayed on the user screens related to the second to seventh functions so that the user may select the display unit also on the user screens related to the second to seventh functions.

### [Second function]

Measurement system 1 according to Modification 5 has the second function (conversion function into a figure format) as one of the support functions. Hereinafter, the second function will be described with reference to Figs. 19A and 19B.

Measurement system 1 can display user screen G301 illustrated in Fig. 19A and user screen G302 illustrated in Fig. 19B on display 70 of terminal 7.

User screen G301 includes table display region H3 similarly to user screen G201 in Fig. 17 and user screen G202 in Fig. 18, for example. User screen G301 may be a part of user screen G201 or G202, or may be a screen displayed separately from user screens G201 and G202. User screen G301 may be a screen displayed by executing an operation for opening past data file FL1 to be described later.

In addition, user screen G301 further includes selection region H8 for the user to select (designate) a display format related to data including the correction position, the correction value, the torque difference, and the like. When the user presses the down arrow mark of selection region H8 with a pointer or the like on the screen, a list of multiple selectable display formats is displayed as a list (pull-down function).

In the example of Fig. 19A, the list includes two display formats of [table format] and [figure format], and [table format] such as table display region H3 is selected as the initial setting.

By selecting one display format other than [table format], here, [figure format] from the list, the user displays user screen G302 in which data including the correction position, the correction value, the torque difference, and the like is represented in a figure format as illustrated in Fig. 19B. User screen G302 may be additionally displayed while user screen G301 is being displayed, or may be displayed instead of user screen G301 closed. In short, measurement system 1 has the second function of converting data including the correction value and the like displayed in a specific display format on the screen into another display format selected according to the selection operation of the user (in this example, from a table format to a figure format) and displaying the data.

User screen G302 includes figure display region H9 in which a horizontal axis schematically representing each of the Y1 axis and the Y2 axis is drawn, numbers ("1" to "3") of three correction points are indicated therein, and the correction position, the correction value, and the torque difference of the Y2 axis as the correction axis for each correction point with respect to the position of the Y1 axis as the reference axis are indicated.

According to the second function, the user can easily display the data including the correction value and the like in a table format or in a figure format according to the selection operation. Therefore, the user can more easily check the data including the correction value and the like. In particular, the user can more intuitively understand the data including the correction value and the like by displaying the data in a figure format.

Note that, this example is described on the assumption that data that is already being displayed in a specific display format is converted into another display format and displayed according to the user's selection operation, but "conversion from the specific display format to another display format " is not essential. In other words, the processing part (here, processing part 71) of measurement system 1 may display data including at least the amount of position correction (correction value) on display 70 in a display format (here, a table format or a figure format) selected according to the (user's) selection operation.

### [Third function]

Measurement system 1 according to Modification 5 has the third function (function of associating date information) as one of the support functions. Hereinafter, the third function will be described with reference to Fig. 20.

Measurement system 1 can display user screen G401 illustrated in Fig. 20 on display 70 of terminal 7.

User screen G401 includes table display region H3, setting region H4, and the like similarly to user screen G201 in Fig. 17 and user screen G202 in Fig. 18, for example. User screen G401 may be a part of user screen G201 or G202, or may be a screen displayed separately from user screens G201 and G202.

User screen G401 is a screen that can be displayed, for example, when the user selects one of one or multiple data files FL1 (see Fig. 20) with a pointer or the like on the screen and executes an operation for opening this data file FL1. Data file FL1 can include at least part of data including the measurement result such as the correction value (amount of position correction) obtained when the test operation has been executed in the past, and the setting conditions (numerical values of parameters) set at the time of measurement, and the like. In the example of Fig. 20, the measurement result obtained when the test operation has been executed in the past is displayed in table display region H3, and the numerical values of the parameters set at the time of the measurement are displayed in setting region H4.

Data file FL1 does not necessarily include both the measurement result and the setting conditions. For example, data file FL1 may include only the setting conditions for management of the setting conditions among the measurement result and the setting conditions, or conversely, may include only the measurement result for management of the measurement result. For example, data file FL1 is stored in storage 73 or the like after the measurement is over, and the contents can be displayed at any timing.

Here, measurement system 1 has the third function of associating, when generating data file FL1, the data with information on the date on which the test operation (measurement of the correction value) has been executed. In other words, measurement system 1 generates and stores data file FL1 in which the data is associated with the date information every time the test operation is executed. User screen G401 displayed by opening data file FL1 further includes date display region H10. In the example of Fig. 20, date display region H10 indicates the date information related to the test operation which has been executed using the numerical values of the parameters displayed in setting region H4 and by which the measurement result being displayed in table display region H3 has been obtained. In the example of Fig. 20, the date information indicates the date and time when the measurement of the correction value has been performed (for example, the time when the measurement of the correction value has ended) such as "measurement date: 2023/07/10 14:27".

According to the third function, the user can easily manage the past data (data file FL1). In addition, for example, in a case where the user browses the past measurement result or the setting conditions used in the past measurement, or performs the measurement from now by using the setting conditions used in the past measurement again, the user can check information on the date on which the measurement has been performed in date display region H10. Thus, convenience is further improved. Note that, in the case of performing the measurement using the past setting conditions again, the test operation using the numerical values of the parameters displayed in setting region H4 can be executed by pressing "start adjustment" on the lower right of user screen G401 in Fig. 20 with a pointer or the like.

### [Fourth function]

Measurement system 1 according to Modification 5 has the fourth function (conversion function into a chart format) as one of the support functions. Hereinafter, the fourth function will be described with reference to Figs. 21A and 21B. The fourth function is a function similar to the second function described with reference to Figs. 19A and 19B.

Measurement system 1 can display user screen G501 illustrated in Fig. 21A and user screen G502 illustrated in Fig. 21B on display 70 of terminal 7.

User screen G501 includes table display region H3 similarly to user screen G201 in Fig. 17, user screen G202 in Fig. 18, user screen G301 in Fig. 19A, and user screen G401 in Fig. 20, for example. User screen G501 may be a part of user screen G201 or G202, may be user screen G301, or may be a screen displayed separately from user screens G201, G202, and G301. In other words, user screen G501 may be a screen displayed by starting the test operation as in user screen G201, or may be a screen displayed by executing an operation for opening past data file FL1 as in user screen G401 in Fig. 20.

In addition, user screen G501 further includes change region H11 for the user to change (convert) the display format of data including the correction position, the correction value, the torque difference, and the like from the table format to another display format. When the user presses the down arrow mark of change region H11 with a pointer or the like on the screen, a list of multiple selectable display formats is displayed as a list (pull-down function). In the example of Fig. 21A, the list includes two display formats: [chart] and [histogram].

By selecting [chart] from the list, the user displays user screen G502 expressed in a chart format based on data including the correction position, the correction value, the torque difference, and the like as illustrated in Fig. 21B. User screen G502 may be additionally displayed while user screen G501 is being displayed, or may be displayed instead of user screen G501 closed.

In short, measurement system 1 has the fourth function of displaying data including the correction value and the like displayed in a specific display format (here, a table format) on the screen into another display format (here, a chart format) selected according to the selection operation of the user.

User screen G502 includes chart display region H12 in which the correction point is on the horizontal axis (the position of the Y1 axis is also described) and the correction value of the position of the Y2 axis with respect to the position of the Y1 axis is on the vertical axis. In chart display region H12, a line graph based on the measurement result indicated in table display region H3 is illustrated. The torque difference of the measurement result is also described in chart display region H12.

According to the fourth function, the user can easily display data including the correction value and the like in a table format or in a chart format. Thus, the user can more easily check the data including the correction value and the like. In particular, by displaying data including the correction value and the like in a chart format, the user can more intuitively understand the degree of change of the correction value from one correction point to another.

Note that, this example is described on the assumption that data that is already being displayed in a specific display format is converted into another display format and displayed according to the user's selection operation, but "conversion from the specific display format to another display format " is not essential. In other words, the processing part (here, processing part 71 of terminal 7) of measurement system 1 may display data including at least the amount of position correction (correction value) on display 70 in a display format (here, a chart format) selected according to the (user's) selection operation.

### [Fifth function]

Measurement system 1 according to Modification 5 has the fifth function (conversion function into a histogram format) as one of the support functions. Hereinafter, the fifth function will be described with reference to Figs. 22A and 22B. The fifth function is a function corresponding to a modification of the fourth function described with reference to Figs. 21A and 21B.

Measurement system 1 can display user screen G503 illustrated in Fig. 22A and user screen G504 illustrated in Fig. 21B on display 70 of terminal 7.

User screen G503 in Fig. 22A includes table display region H3 similarly to user screen G501 in Fig. 21A and the like. Note that, Fig. 22A illustrates table display region H3 in which the number of correction points and the numerical values of the measurement result are different from those in Fig. 21A. In addition, user screen G503 further includes change region H11 similarly to user screen G501. In the example of Fig. 22A, the list also includes two display formats: [chart] and [histogram].

By selecting [histogram] from the list, the user displays user screen G504 expressed in a histogram format based on data including the correction value and the like as illustrated in Fig. 22B. User screen G504 may be additionally displayed while user screen G503 is being displayed, or may be displayed instead of user screen G503 closed.

In short, measurement system 1 has the fifth function of displaying data including the correction value and the like displayed in a specific display format (here, a table format) on the screen into another display format (here, a histogram format) selected according to the selection operation of the user.

User screen G504 includes histogram display region H13 indicating the distribution characteristic (histogram) of the number (number of times) of correction values (of the measurement result) included in each section with the number of times (frequency) on the vertical axis and the rank (section) related to the correction value on the horizontal axis.

According to the fifth function, the user can easily display data including the correction position, the correction value, the torque difference, and the like in a table format or in a histogram format. Thus, the user can more easily check these pieces of data. In particular, the user can more intuitively understand the degree of variation of the correction value by displaying these pieces of data in the histogram format.

Note that, this example is also described on the assumption that data that is already being displayed in a specific display format is converted into another display format and displayed according to the user's selection operation, but "conversion from the specific display format to another display format " is not essential. In other words, the processing part (here, processing part 71 of terminal 7) of measurement system 1 may display data including at least the amount of position correction (correction value) on display 70 in a display format (here, a histogram format) selected according to the (user's) selection operation. The display format of the data selected according to the selection operation is preferably any of a table format, a figure format, a chart format, and a histogram format.

In addition, chart display region H12 in Fig. 21B and histogram display region H13 in Fig. 22B may be displayed on one screen at the same time in addition to being selectively switched. For example, chart display region H12 and histogram display region H13 as well as table display region H3 may be displayed on one screen at the same time.

### [Sixth function]

Measurement system 1 according to Modification 5 has the sixth function (past data comparison display function) as one of the support functions. Hereinafter, the sixth function will be described with reference to Fig. 23.

Measurement system 1 can display user screen G601 and user screen G602 illustrated in Fig. 23 on display 70 of terminal 7.

For example, on a specific screen indicating a folder in which multiple data files FL1 each at least including the measurement result are stored, the user performs an operation of selecting any two or more data files FL1 whose measurement results the user intends to compare with a pointer or the like. Note that, since data file FL1 has been described in the column of the third function, a detailed description thereof will be omitted here. In addition, a case where two data files FL1 are selected will be described below as an example, but three or more (for example, three) data files FL1 may be selected and compared.

User screen G601 is an example of a screen showing first data file FL11 and second data file FL12 selected by the user as comparison targets.

In the example of Fig. 23, first data file FL11 is a past data file including the measurement result obtained at 14:27 with the measurement date of July 10, 2023. Meanwhile, second data file FL12 is a past data file including the measurement result obtained at 15:14 with the measurement date of August 3, 2023.

For example, second data file FL12 may include the latest data, and first data file FL11 may include data older than the data of second data file FL12. More specifically, the user may select second data file FL12 generated by performing the measurement this time and first data file FL11 generated by performing the measurement last time, compare the correction values and the like, and determine the degree of aging deterioration of the devices such as the Y1 axis and the Y2 axis.

When the user selects first data file FL11 and second data file FL12 and presses an operation button for executing comparison with a pointer or the like on the screen, user screen G602 is displayed. User screen G602 may be additionally displayed while user screen G601 is being displayed, or may be displayed instead of user screen G601 closed.

User screen G602 includes table display region H14 in which the measurement result of the correction value and the like in first data file FL11 and the measurement result of the correction value and the like in second data file FL12 are arranged right and left in [table format].

Here, measurement system 1 performs highlight display H15 in table display region H14 for the numerical values of the measurement result of second data file FL12 whose difference from the numerical values of the measurement result of first data file FL11 is determined to be larger than a predetermined value. For example, measurement system 1 surrounds a target numerical value with a frame or displays the target numerical value with color as highlight display H15. In other words, measurement system 1 performs highlight display H15 in table display region H14 to call the user's attention to the presence of such a numerical value.

That is, measurement system 1 has the sixth function of displaying two or more (here, two as an example) pieces of past data designated according to the selection operation of the user in a table format for facilitating comparison. In addition, measurement system 1 also has a function of performing automatic comparison determination for two or more (here, two as an example) pieces of past data designated, and if numerical values whose difference is determined to be larger than the predetermined value exists, performing highlight display H15 for the numerical values.

As described above, measurement system 1 includes the processing part and the storage (here, processing part 71 and storage 73 as an example). Processing part 71 causes display 70 to display data including at least the amount of position correction (correction value). Storage 73 stores data as history information every time the test operation is executed (storage of data file FL1). Processing part 71 displays two or more pieces of data (data files FL1) selected according to the selection operation among the multiple pieces of past data (data files FL1) stored in storage 73 in a mutually comparable manner. In addition, processing part 71 displays two or more pieces of data in a display format (here, a table format) selected according to the selection operation.

According to the sixth function, since two or more pieces of past data including at least the correction value are displayed in a table format on one screen, it is possible to support the user to easily check the characteristics of the devices such as the Y1 axis and the Y2 axis. In particular, the user compares two (or two or more) pieces of data of new data and old data, and if the correction value of the new data is larger than the correction value of the old data, it is easy to determine that the aging deterioration of the devices such as the Y1 axis and the Y2 axis progresses.

The above-described determination condition for highlighting "if numerical values whose difference is determined to be larger than the predetermined value exists" is merely an example, and the determination condition is not limited thereto. For example, conversely, if numerical values whose difference is determined to be less than a specified value exists, highlight display H15 may be performed on the numerical values, or alternatively, if numerical values whose difference is "out of a predetermined range (or within the predetermined range)", highlight display H15 may be performed on the numerical values.

Still alternatively, highlight display H15 may be performed under a determination condition that "if a numerical value whose difference from a numerical value (for example, of first data file FL11) to be compared is larger than 5% (or less than 5%) exists", that is, a determination condition using "ratio". In addition, the determination condition may be appropriately changed depending on the type of parameters having a difference.

Further, the predetermined value, the specified value, the predetermined range, and the ratio described above may be appropriately designated by the user on the user screen.

### [Seventh function]

Measurement system 1 according to Modification 5 has the seventh function (comparison display function in a chart format and comparison display function in a histogram format) as one of the support functions. Hereinafter, the seventh function will be described with reference to Figs. 24A and 24B. The seventh function is a function corresponding to a modification of the sixth function described with reference to Fig. 23.

Measurement system 1 can display user screen G603 illustrated in Fig. 24A and user screen G604 illustrated in Fig. 24B on display 70 of terminal 7.

For example, on a specific screen indicating a folder in which multiple data files FL1 each at least including the measurement result are stored, the user performs an operation of selecting any two or more data files FL1 whose measurement results the user intends to compare with a pointer or the like. Here, as an example, it is assumed that first data file FL11 and second data file FL12 described in the sixth function are selected. That is, a case where two data files FL1 are selected will be described. However, three or more (for example, three) data files FL1 may be selected. Data file FL1, first data file FL11, and second data file FL12 have been described in the column of the third function and the column of the sixth function, and thus the detailed description thereof will be omitted here.

When the user selects first data file FL11 and second data file FL12 and presses an operation button for executing comparison with a pointer or the like on the screen, user screen G603 (see Fig. 24A) is displayed. User screen G603 may be displayed as a set with user screen G602 in a table form of Fig. 23.

For example, similarly to user screen G502 in Fig. 21B, user screen G603 includes chart display region H16 in which the correction point is on the horizontal axis (the position of the Y1 axis is also described) and the correction value of the position of the Y2 axis with respect to the position of the Y1 axis is on the vertical axis. Chart display region H16 includes, for example, line graph W1 indicating the measurement result (correction value) of first data file FL11 and line graph W2 indicating the measurement result (correction value) of second data file FL12 in table display region H3 of Fig. 23.

In addition, user screen G603 further includes selection region H17 for the user to select one of two display formats of a chart format and a histogram format. When the user presses the down arrow mark of selection region H17 with a pointer or the like on the screen, a list of multiple selectable display formats is displayed as a list (pull-down function). In the example of Fig. 24A, the list includes two display formats: [chart] and [histogram]. Here, [chart] is selected as the initial setting. By selecting [chart] or [histogram] from the list, the user can switch the display format between a chart format (see Fig. 24A) and a histogram format (see Fig. 24B).

As illustrated in Fig. 24B, for example, similarly to user screen G504 in Fig. 22B, user screen G604 includes histogram display region H18 indicating the distribution chart (histogram) of the number (number of times) of correction values (of the measurement result) included in each section with the number of times (frequency) on the vertical axis and the rank (section) related to the correction value on the horizontal axis. User screen G604 further includes selection region H17 similarly to user screen G603.

Histogram display region H18 indicates, for example, distribution characteristic Q1 of the number of correction values in each section based on the measurement result of first data file FL11 and distribution characteristic Q2 of the number of correction values in each section based on the measurement result of second data file FL12.

As described above, measurement system 1 has the seventh function of displaying two or more pieces of past data designated according to the selection operation of the user in a display format (chart format, histogram format) according to the selection operation of the user so that the two or more pieces of past data can be easily compared.

According to the seventh function, since two or more pieces of past data including at least the correction value are displayed in a chart format or a histogram format on one screen, it is possible to support the user to easily check the characteristics of the devices such as the Y1 axis and the Y2 axis. In particular, by comparing two (or two or more) pieces of data of the new data and the old data displayed in the chart format, the user can more intuitively understand how much the aging deterioration of the devices such as the Y1 axis and the Y2 axis progresses based on the difference in the degree of change of the correction value from one correction point to another. In addition, by comparing two (or two or more) pieces of data of the new data and the old data displayed in the histogram format, the user can more intuitively understand how much the aging deterioration of the devices such as the Y1 axis and the Y2 axis progresses based on the difference in the degree of variation of the correction value.

Note that, chart display region H16 and histogram display region H18 may be displayed on one screen at the same time in addition to being selectively switched. For example, chart display region H16 and histogram display region H18 as well as table display region H14 in Fig. 23 may be displayed on one screen at the same time.

In addition, selection region H17 may be displayed on user screen G602 of Fig. 23, and the user may select one of the three display formats including a table format, a chart format, and a histogram format.

Note that, this example is also described on the assumption that data that is already being displayed in a specific display format is converted into another display format and displayed according to the user's selection operation, but "conversion from the specific display format to another display format " is not essential. Specifically, processing part 71 may display two or more pieces of data (data files FL1) selected according to the selection operation among the multiple pieces of past data (data files FL1) stored in storage 73 in a mutually comparable manner. In addition, processing part 71 may display two or more pieces of data in a display format (here, a chart format or a histogram format) selected according to the selection operation. Note that, the display format of the two or more pieces of data selected according to the selection operation are preferably any of a table format, a figure format, a chart format, and a histogram format.

### (Conclusions)

The following aspects are disclosed from the above-described exemplary embodiment and the like.

Measurement system (1) according to a first aspect is configured to measure the amount of position correction to be applied to synchronous drive system (2). Synchronous drive system (2) includes: first main shaft (Y1) and second main shaft (Y2); and first controller (31) and second controller (32). First main shaft (Y1) and second main shaft (Y2) are connected in parallel to each other via sub shaft (X1). First main shaft (Y1) and second main shaft (Y2) include first motor (M1) and second motor (M2), respectively. First controller (31) and second controller (32) are configured to respectively control first motor (M1) and second motor (M2) so that first main shaft (Y1) and second main shaft (Y2) move in axial direction (D1) in synchronization with each other. Measurement system (1) includes: command part (10); first acquisition part (11); second acquisition part (12); and calculation part (14). Command part (10) is configured to give the same position command to first controller (31) and second controller (32) to cause these parts to control first motor (M1) and second motor (M2) so as to perform a test operation in which first main shaft (Y1) and second main shaft (Y2) move to designated positions in synchronization with each other. First acquisition part (11) is configured to acquire first information on a first force to be applied to first main shaft (Y1) and a second force to be applied to second main shaft (Y2) during the test operation. Second acquisition part (12) is configured to acquire second information on the positions of first motor (M1) and second motor (M2) during the test operation. Calculation part 14 is configured to calculate the amount of position correction of at least one of first motor (M1) and second motor (M2) in order to correct a position shift between first main shaft (Y1) and second main shaft (Y2) based on the first information and the second information.

According to the above aspect, the amount of position correction to be applied to synchronous drive system (2) is calculated based on the first information on the first force to be applied to first main shaft (Y1) and the second force to be applied to second main shaft (Y2) and the second information. Thus, measurement system (1) has an advantage that it is possible to suppress an influence that can occur due to interaxial interference.

Measurement system (1) according to a second aspect is characterized in that, in the first aspect, calculation part (14) obtains a difference value between the first force and the second force acquired at the same time, and multiplies the difference value by a correction coefficient to calculate the amount of position correction.

According to the above aspect, the accuracy regarding the amount of position correction is further improved, and the influence that can occur due to interaxial interference can be further suppressed.

Measurement system (1) according to a third aspect further includes third acquisition part (13) and coefficient computing part (15) in the second aspect. Third acquisition part (13) is configured to acquire third information on the frequency characteristic of vibration in drive system (A1) including each of first motor (M1) and second motor (M2). Coefficient computing part (15) is configured to calculate the correction coefficient based on the load mass of each of first main shaft (Y1) and second main shaft (Y2) and the third information.

According to the above aspect, the accuracy regarding the amount of position correction is further improved, and the influence that can occur due to interaxial interference can be further suppressed.

Measurement system (1) according to a fourth aspect further includes coefficient computing part (15) that calculates the correction coefficient in the second aspect. The test operation further includes a specific test operation in which first main shaft (Y1) and second main shaft (Y2) move to designated positions in synchronization with each other by giving different position commands so that a shift occurs between first main shaft (Y1) and second main shaft (Y2) by a predetermined amount of movement. Coefficient computing part (15) calculates the correction coefficient based on fourth information on the first force and the second force during the specific test operation and the predetermined amount of movement.

According to the above aspect, the accuracy regarding the amount of position correction is further improved, and the influence that can occur due to interaxial interference can be further suppressed.

Measurement system (1) according to a fifth aspect is characterized in that, in the fourth aspect, the test operation further includes a reference test operation in which first main shaft (Y1) and second main shaft (Y2) move to designated positions in synchronization with each other by giving the same position command. Coefficient computing part (15) calculates the correction coefficient based on the fourth information, the predetermined amount of movement, and fifth information on the first force and the second force during the reference test operation.

According to the above aspect, the accuracy regarding the amount of position correction is further improved, and the influence that can occur due to interaxial interference can be further suppressed.

Measurement system (1) according to a sixth aspect is characterized in that, in the fifth aspect, the fourth information includes information on a specific difference value that is a difference value between the first force and the second force acquired at the same time during the specific test operation. The fifth information includes information on a reference difference value that is a difference value between the first force and the second force acquired at the same time during the reference test operation. Coefficient computing part (15) calculates the correction coefficient based on the amount of change of the specific difference value with respect to the reference difference value and the predetermined amount of movement.

According to the above aspect, the accuracy regarding the amount of position correction is further improved, and the influence that can occur due to interaxial interference can be further suppressed.

Measurement system (1) according to a seventh aspect is characterized in that, in any one of the first to sixth aspects, calculation part (14) calculates the amount of position correction of one of first motor (M1) and second motor (M2) based on the position of the other.

According to the above aspect, the amount of position correction can be easily calculated as compared with the case where the reference position is set separately from the positions of first motor (M1) and second motor (M2).

Measurement system (1) according to an eighth aspect is characterized by including processing part (71) in any one of the first to seventh aspects. Processing part (71) acquires, as parameters to be applied to the test operation, the start point of the test operation, the end point of the test operation, and the number of correction points that is the number of points at which the amount of position correction is calculated between the start point and the end point. Processing part (71) calculates the correction interval from the number of correction points, the start point, and the end point.

According to the above aspect, for example, when the user designates the number of correction points, the design based on the amount of memory is guaranteed as to how much amount of memory (such as storage 5) required to store data on the amount of position correction increases.

Measurement system (1) according to a ninth aspect is characterized by including processing part (71) in any one of the first to seventh aspects. Processing part (71) causes display (70) to display data including at least the amount of position correction. Processing part (71) converts the display part such that a numerical value of the data displayed in a specific part on the screen of display (70) is displayed in another part selected according to the selection operation.

According to the above aspect, the setting condition, the measurement result, and the like can be checked with numerical values that are more intuitively understandable by the user.

Measurement system (1) according to a tenth aspect is characterized by including processing part (71) in any one of the first to seventh aspects. Processing part (71) causes display (70) to display data including at least the amount of position correction. Processing part 71 displays the data in a display format selected according to the selection operation. The display format is any of a table format, a figure format, a chart format, and a histogram format.

According to the above aspect, the user can more easily check data.

Measurement system (1) according to an eleventh aspect is characterized by including processing part (71) and storage (73) in any one of the first to seventh aspects. Processing part (71) causes display (70) to display data including at least the amount of position correction. Storage (73) stores the data as history information every time the test operation is executed. Processing part (71) displays two or more pieces of the data selected according to the selection operation among the multiple pieces of past data stored in storage (73) in a mutually comparable manner.

According to the above aspect, the user can easily compare two or more pieces of past data including the amount of position correction.

Measurement system (1) according to a twelfth aspect is characterized in that, in the eleventh aspect, processing part (71) displays the two or more pieces of data in a display format selected according to the selection operation. The display format is any of a table format, a figure format, a chart format, and a histogram format.

According to the above aspect, the user can more easily compare two or more pieces of past data including the amount of position correction.

Control device (C1) according to a thirteenth aspect includes controller (3) that is any one of first controller (31) and second controller (32) to which the position command is input from measurement system (1) in any one of the first to twelfth aspects. controller (3) controls a corresponding motor out of first motor (M1) and second motor (M2) based on the position command so as to perform the test operation in which a corresponding main shaft out of first main shaft (Y1) and second main shaft (Y2) moves to the designated position. Control device (C1) further includes first output part (41) and second output part (42). First output part (41) outputs the first information on the force applied to the main shaft during the test operation. Second output part (42) outputs the second information on the position of the motor during the test operation.

According to the above aspect, it is possible to provide control device (C1) capable of suppressing an influence that can occur due to interaxial interference.

Control device (C1) according to a fourteenth aspect includes controller (3) that is one of first controller (31) and second controller (32) to which a position command is input from measurement system (1) in any one of the first to twelfth aspects. Control device (C1) has at least a part of the functions related to command part (10), first acquisition part (11), second acquisition part (12), and calculation part (14) in measurement system (1).

According to the above aspect, it is possible to provide control device (C1) capable of suppressing an influence that can occur due to interaxial interference.

Control device (C1) according to a fifteenth aspect includes controller (3) that is one of first controller (31) and second controller (32) to which a position command is input from measurement system (1) in any one of the first to twelfth aspects. Control device (C1) further includes storage (5) that stores correction information including the amount of position correction calculated by calculation part (14). controller 3 controls a corresponding motor out of first motor (M1) and second motor (M2) based on the correction information stored in storage (5) during the test operation or the normal operation.

According to the above aspect, it is possible to provide control device (C1) capable of suppressing an influence that can occur due to interaxial interference.

A measurement method according to a sixteenth aspect is for measuring the amount of position correction to be applied to synchronous drive system (2). Synchronous drive system (2) includes: first main shaft (Y1) and second main shaft (Y2); and first controller (31) and second controller (32). First main shaft (Y1) and second main shaft (Y2) are connected in parallel to each other via sub shaft (X1). First main shaft (Y1) and second main shaft (Y2) include first motor (M1) and second motor (M2), respectively. First controller (31) and second controller (32) are configured to respectively control first motor (M1) and second motor (M2) so that first main shaft (Y1) and second main shaft (Y2) move in axial direction (D1) in synchronization with each other. The measurement method includes a command processing step, a first acquisition processing step, a second acquisition processing step, and a calculation processing step. In the command processing step, the same position command is given to first controller (31) and second controller (32) to cause these parts to control first motor (M1) and second motor (M2) so as to perform a test operation in which first main shaft (Y1) and second main shaft (Y2) move to designated positions in synchronization with each other. In the first acquisition processing step, first information on a first force to be applied to first main shaft (Y1) and a second force to be applied to second main shaft (Y2) during the test operation is acquired. In the second acquisition processing step, second information on the positions of first motor (M1) and second motor (M2) during the test operation is acquired. In the calculation processing step, the amount of position correction of at least one of first motor (M1) and second motor (M2) is calculated in order to correct a position shift between first main shaft (Y1) and second main shaft (Y2) based on the first information and the second information.

According to the above aspect, it is possible to provide the measurement method capable of suppressing an influence that can occur due to interaxial interference.

A program according to a seventeenth aspect is a program for causing one or more processors to execute the measurement method according to the sixteenth aspect.

According to the above aspect, it is possible to provide the function capable of suppressing an influence that can occur due to interaxial interference.

The configuration according to the second to twelfth aspects is not an essential configuration to measurement system (1), and can be omitted as appropriate.

### INDUSTRIAL APPLICABILITY

According to the measurement system, the control device, the measurement method, and the program of the present disclosure, it is possible to suppress an influence that can occur due to interaxial interference. Thus, the measurement system, the control device, the measurement method, and the program of the present disclosure are industrially useful.

### REFERENCE MARKS IN THE DRAWINGS

1: measurement system
10: command part
11: first acquisition part
12: second acquisition part
13: third acquisition part
14: calculation part
15: coefficient computing part
2: synchronous drive system
3: controller
31: first controller
32: second controller
41: first output part
42: second output part
5: storage
51: first storage
52: second storage
53: power converter
70: display
71: processing part
73: storage
A1: drive system
A11: first drive system
A12: second drive system
C1: control device
D1: axial direction
M1: first motor
M2: second motor
P1, P2: processing part
X1: sub shaft
Y1: first main shaft
Y2: second main shaft

## Claims

1. A measurement system that measures an amount of position correction to be applied to a synchronous drive system including: a first main shaft and a second main shaft that are connected in parallel to each other via a sub shaft and include a first motor and a second motor, respectively; and a first controller and a second controller that respectively control the first motor and the second motor to cause the first main shaft and the second main shaft to move in an axial direction in synchronization with each other, the measurement system comprising:
a command part that gives a same position command to the first controller and the second controller to cause the first controller and the second controller to control the first motor and the second motor so as to perform a test operation in which the first main shaft and the second main shaft move to designated positions in synchronization with each other;
a first acquisition part that acquires first information on a first force to be applied to the first main shaft and a second force to be applied to the second main shaft during the test operation;
a second acquisition part that acquires second information on positions of the first motor and the second motor during the test operation; and
a calculation part that calculates the amount of position correction of at least one of the first motor and the second motor in order to correct a position shift between the first main shaft and the second main shaft based on the first information and the second information.

2. The measurement system according to Claim 1, wherein the calculation part obtains a difference value between the first force and the second force acquired at the same time, and multiplies the difference value by a correction coefficient to calculate the amount of position correction.

3. The measurement system according to Claim 2, further comprising:
a third acquisition part that acquires third information on a frequency characteristic of vibration in a drive system including each of the first motor and the second motor; and
a coefficient computing part that calculates the correction coefficient based on a load mass of each of the first main shaft and the second main shaft and the third information.

4. The measurement system according to Claim 2, further comprising a coefficient computing part that calculates the correction coefficient, wherein
the test operation further includes a specific test operation in which the first main shaft and the second main shaft move to designated positions in synchronization with each other by giving different position commands to cause a shift between the first main shaft and the second main shaft by a predetermined amount of movement, and
the coefficient computing part calculates the correction coefficient based on fourth information on the first force and the second force during the specific test operation and the predetermined amount of movement.

5. The measurement system according to Claim 4, wherein
the test operation further includes a reference test operation in which the first main shaft and the second main shaft move to designated positions in synchronization with each other by giving the same position command, and
the coefficient computing part calculates the correction coefficient based on the fourth information, the predetermined amount of movement, and fifth information on the first force and the second force during the reference test operation.

6. The measurement system according to Claim 5, wherein
the fourth information includes information on a specific difference value that is a difference value between the first force and the second force acquired at a same time during the specific test operation,
the fifth information includes information on a reference difference value that is a difference value between the first force and the second force acquired at the same time during the reference test operation, and
the coefficient computing part calculates the correction coefficient based on an amount of change of the specific difference value with respect to the reference difference value and the predetermined amount of movement.

7. The measurement system according to Claim 1, wherein the calculation part calculates the amount of position correction of one of the first motor and the second motor based on the position of the other one of the first motor and the second motor.

8. The measurement system according to Claim 1, further comprising a processing part that acquires, as parameters to be applied to the test operation, a start point of the test operation, an end point of the test operation, and a number of correction points that is a number of points at which the amount of position correction is calculated between the start point and the end point, wherein the processing part calculates a correction interval from the number of correction points, the start point, and the end point.

9. The measurement system according to Claim 1, further comprising a processing part that causes a display to display data including at least the amount of position correction, wherein the processing part converts a display part to cause a numerical value of the data displayed in a specific part on a screen of the display to be displayed in another part selected according to a selection operation.

10. The measurement system according to Claim 1, further comprising a processing part that causes a display to display data including at least the amount of position correction, wherein
the processing part displays the data in a display format selected according to a selection operation, and
the display format is any of a table format, a figure format, a chart format, and a histogram format.

11. The measurement system according to Claim 1, further comprising:
a processing part that causes a display to display data including at least the amount of position correction; and
a storage that stores the data as history information every time the test operation is executed, wherein
the processing part displays two or more pieces of the data selected according to a selection operation among a plurality of pieces of the past data stored in the storage in a mutually comparable manner.

12. The measurement system according to Claim 11, wherein
the processing part displays the two or more pieces of the data in a display format selected according to the selection operation, and
the display format is any of a table format, a figure format, a chart format, and a histogram format.

13. A control device comprising a controller that is any one of the first controller and the second controller to which the position command is input from the measurement system according to Claim 1, wherein
the controller controls a corresponding motor out of the first motor and the second motor based on the position command so as to perform the test operation in which a corresponding main shaft out of the first main shaft and the second main shaft moves to the designated position, and
the control device further includes:
a first output part that outputs the first information on the force applied to the main shaft during the test operation; and
a second output part that outputs the second information on a position of the motor during the test operation.

14. A control device comprising a controller that is any one of the first controller and the second controller to which the position command is input from the measurement system according to Claim 1, wherein the control device has at least a part of functions related to the command part, the first acquisition part, the second acquisition part, and the calculation part in the measurement system.

15. A control device comprising a controller that is any one of the first controller and the second controller to which the position command is input from the measurement system according to Claim 1, the control device further comprising
a storage that stores correction information including the amount of position correction calculated by the calculation part, wherein
the controller controls a corresponding motor out of the first motor and the second motor based on the correction information stored in the storage during any of the test operation and a normal operation.

16. A measurement method for measuring an amount of position correction to be applied to a synchronous drive system including: a first main shaft and a second main shaft that are connected in parallel to each other via a sub shaft and include a first motor and a second motor, respectively; and a first controller and a second controller that respectively control the first motor and the second motor to cause the first main shaft and the second main shaft to move in an axial direction in synchronization with each other, the measurement method comprising:
a command processing step for giving a same position command to the first controller and the second controller to cause the first controller and the second controller to control the first motor and the second motor so as to perform a test operation in which the first main shaft and the second main shaft move to designated positions in synchronization with each other;
a first acquisition processing step for acquiring first information on a first force to be applied to the first main shaft and a second force to be applied to the second main shaft during the test operation;
a second acquisition processing step for acquiring second information on positions of the first motor and the second motor during the test operation; and
a calculation processing step for calculating the amount of position correction of at least one of the first motor and the second motor in order to correct a position shift between the first main shaft and the second main shaft based on the first information and the second information.

17. A program for causing one or more processors to execute the measurement method according to Claim 16.
